# EUROPÄISCHE PATENTSCHRIFT

(11) **EP 2 352 741 B1**
(45) Veröffentlichungstag und Bekanntmachung des Hinweises auf die Patenterteilung: **28.08.2013**
(21) Anmeldenummer: 09778835.0
(22) Anmeldetag: 06.10.2009
(51) Int. Cl.: C08K 5/5313, C07F 9/32

(54) **VERFAHREN ZUR HERSTELLUNG VON MONO-AMINOFUNKTIONALISIERTEN DIALKYLPHOPHINSÄUREN, -ESTERN UND -SALZEN UND IHRE VERWENDUNG**
METHOD FOR PRODUCING MONO AMINO-FUNCTIONALISED DIALKYLPHOSPHINITE ACIDS ESTERS AND SALTS AND USE THEREOF
PROCÉDÉ DE FABRICATION D'ACIDES DIALKYLPHOSPHINIQUES MONO-AMINOFONCTIONNALISÉS, DE LEURS ESTERS ET DE LEURS SELS ET LEUR UTILISATION

(30) Priorität: 07.11.2008 DE 102008056339
(43) Veröffentlichungstag der Anmeldung: 10.08.2011
(73) Patentinhaber: Clariant International Ltd., 4132 Muttenz 1 (CH)
(72) Erfinder: HILL, Michael, 50827 Köln (DE); KRAUSE,Werner, 50354 Hürth (DE); SICKEN, Martin, 51149 Köln (DE)
(74) Vertreter: Paczkowski, Marcus
(86) Internationale Anmeldenummer: PCT/EP2009/007134
(87) Internationale Veröffentlichungsnummer: WO 2010/051894

(56) Entgegenhaltungen:
- EP-A1- 0 463 560
- EP-A2- 0 319 482
- WO-A1-2005/044830
- WO-A1-2010/051886
- US-A- 5 190 934
- US-A1- 2002 187 977
- US-A1- 2005 187 196
- MONTCHAMP J L: "Recent advances in phosphorus-carbon bond formation: synthesis of H-phosphinic acid derivatives from hypophosphorous compounds" JOURNAL OF ORGANOMETALLIC CHEMISTRY, ELSEVIER-SEQUOIA S.A. LAUSANNE, CH, Bd. 690, Nr. 10, 16. Mai 2005 (2005-05-16) , Seiten 2388-2406, XP004877374 ISSN: 0022-328X
- SYLVINE DEPRÈLE ET AL: "Palladium-Catalyzed Hydrophosphinylation of Alkenes and Alkynes" JOURNAL OF THE AMERICAN CHEMICAL SOCIETY, AMERICAN CHEMICAL SOCIETY, WASHINGTON, DC. US, Bd. 124, Nr. 32, 1. Januar 2002 (2002-01-01), Seite 9387, XP002500862 ISSN: 0002-7863
- BRAVO-ALTAMIRANO ET AL: "A novel approach to phosphonic acids from hypophosphorous acid" TETRAHEDRON LETTERS, ELSEVIER, AMSTERDAM, NL, Bd. 48, Nr. 33, 19. Juli 2007 (2007-07-19) , Seiten 5755-5759, XP022163552 ISSN: 0040-4039
- SYLVINE DEPRÈLE ET AL: "Environmentally Benign Synthesis of H-Phosphinic Acids Using a Water-Tolerant, Recyclable Polymer-Supported Catalyst" ORGANIC LETTERS, AMERICAN CHEMICAL SOCIETY, US, Bd. 6, Nr. 21, 1. Januar 2004 (2004-01-01) , Seiten 3805-3808, XP002500861 ISSN: 1523-7060 [gefunden am 2004-09-18]
- PATRICE RIBIÈRE ET AL: "NiCl2-Catalyzed Hydrophosphinylation" JOURNAL OF ORGANIC CHEMISTRY, AMERICAN CHEMICAL SOCIETY, EASTON.; US, Bd. 70, Nr. 10, 1. Januar 2005 (2005-01-01), Seiten 4064-4072, XP002530191 ISSN: 0022-3263
- FROESTL W. ET AL: "PHOSPHINIC ACID ANALOGUES OF GABA. 2. SELECTIVE, ORALLY ACTIVE GABAB ANTAGONISTS" JOURNAL OF MEDICINAL CHEMISTRY, AMERICAN CHEMICAL SOCIETY, WASHINGTON, US, Bd. 38, Nr. 17, 1. Januar 1995 (1995-01-01), Seiten 3313-3331, XP000999491 ISSN: 0022-2623

## Beschreibung

Die Erfindung betrifft ein Verfahren zur Herstellung von mono-aminofunktionalisierten Dialkylphosphinsäuren, -estern und -salzen und ihre Verwendung.

W. Froestl et al. beschreiben in J. of Med. Chem., Am. Chem. Soc., Nr. 17 vom 01.11.1995 auf den Seiten 3313 - 3331 die pharmakologischen Eigenschaften von substituierten 3-Aminopropylphosphinsäuren.

In der EP-A-0463560 werden stickstoffhaltige 3-Aminopropylphosphinsäuren beschrieben, die GABAB-antagonistische Eigenschaften aufweisen und als Arzneimittelwirkstoffe verwendet werden.

Die US-A-2002/0187977 beschreibt Arzneimittel, die zur Behandlung von Stress-Symptomatiken eingesetzt werden und als Bestandteil u. a. 3-Aminopropyl-n-butylphosphinsäure enthält.

Bisher fehlt es an Verfahren zur Herstellung von mono-aminofunktionalisierten Dialkylphosphinsäuren, -estern und -salzen, die wirtschaftlich und großtechnisch zugänglich sind und die insbesondere eine hohe Raum-/Zeitausbeute ermöglichen. Auch fehlt es an Verfahren, die ohne störende Halogenverbindungen als Edukte ausreichend effektiv sind und zudem an solchen, bei denen die Endprodukte leicht erhalten bzw. isoliert werden können oder auch unter gezielten Reaktionsbedingungen (wie etwa einer Umesterung) gezielt und gewünscht hergestellt werden können.

Die Erfindung betrifft daher ein Verfahren zur Herstellung von mono-aminofunktionalisierten Dialkylphosphinsäuren, -estern und -salzen, dadurch gekennzeichnet, dass man
a) eine Phosphinsäurequelle (I) 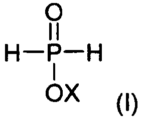 mit Olefinen (IV) 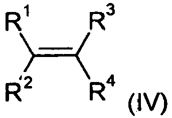 in Gegenwart eines Katalysators A zu einer Alkylphosphonigsäure, deren Salz oder Ester (II) 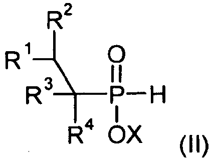 umsetzt,
b) die so entstandene Alkylphosphonigsäure, deren Salz oder Ester (II) mit einem Allylamin (V) 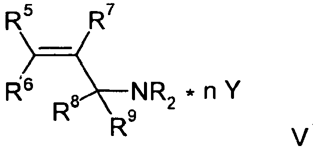 in Gegenwart eines Katalysators B zum mono-aminofunktionalisierten Dialkylphosphinsäurederivat (III) 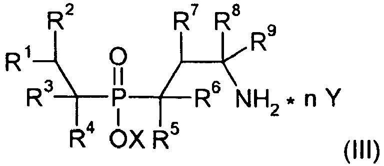 umsetzt, die nach Schritt a) erhaltene Alkylphosphonigsäure, deren Salz oder Ester (II) und/oder die nach Schritt b) erhaltene mono-aminofunktionalisierte Dialkylphosphinsäure, deren Salz oder Ester (III) und/oder die jeweils resultierende Reaktionslösung davon mit einem Alkylenoxid oder einem Alkohol M-OH und/oder M'-OH verestert, und den jeweils entstandenen Alkylphosphonigsäureester (II) und/oder mono-aminofunktionalisierten Dialkylphosphinsäureester (III) dem weiteren Reaktionsschritt c) unterwirft, wobei R¹, R², R³, R⁴, R⁵, R⁶, R⁷, R⁸, R⁹ gleich oder verschieden sind und unabhängig voneinander H, C₁-C₈-Alkyl, C₆-C₁₈-Aryl, C₆-C₁₈-Aralkyl, C₆-C₁₈-Alkyl-Aryl, CN, CHO, OC(O)CH₂CN, CH(OH)C₂H₅, CH₂CH(OH)CH₃, 9-Anthracen, 2-Pyrrolidon, (CH₂)ₘOH, (CH₂)ₘNH₂, (CH₂)ₘNCS, (CH₂)ₘNC(S)NH₂, (CH₂)ₘSH, (CH₂)ₘS-2-thiazolin, (CH₂)ₘSiMe₃, C(O)R¹⁰, CH=CH-R¹⁰, CH=CH-C(O)R¹⁰ bedeuten, die Gruppen C₆-C₁₈-Aryl, C₆-C₁₈-Aralkyl und C₆-C₁₈-Alkyl-Aryl mit -C(O)CH₃, OH, CH₂OH, NH₂, NO₂, OCH₃, SH und/oder OC(O)CH₃ substituiert sein können, wobei R¹⁰ für C₁-C₈-Alkyl oder C₆-C₁₈-Aryl steht und m eine ganze Zahl von 0 bis 10 bedeutet und X für C₁-C₁₈-Alkyl, C₆-C₁₈-Aryl, C₆-C₁₈-Aralkyl, C₆-C₁₈-Alkyl-Aryl, (CH₂)ₖOH, CH₂-CHOH-CH₂OH, (CH₂)ₖO(CH₂)ₖH, (CH₂)ₖ-CH(OH)-(CH₂)ₖH, (CH₂-CH₂O)ₖH, (CH₂-C[CH₃]HO)ₖH, (CH₂-C[CH₃]HO)ₖ(CH₂-CH₂O)ₖH, (CH₂-CH₂O)ₖ(CH₂-C[CH₃]HO)H, (CH₂-CH₂O)ₖ-alkyl, (CH₂-C[CH₃]HO)ₖ-alkyl, (CH₂-C[CH₃]HO)ₖ(CH₂-CH₂O)ₖ-alk, (CH₂-CH₂O)ₖ(CH₂-C[CH₃]HO)O-alkyl, (CH₂)ₖ-CH=CH(CH₂)ₖH, (CH₂)ₖNH₂, (CH₂)ₖN[(CH₂)ₖH]₂ steht wobei k eine ganze Zahl von 0 bis 10 ist und/oder für Mg, Ca, Al, Sb, Sn, Ge, Ti, Fe, Zr, Zn, Ce, Bi, Sr, Mn, Cu, Ni, Li, Na, K, H und/oder eine protonierte Stickstoffbase steht und Y für eine Mineralsäure, Carbonsäure, Lewissäure oder ogranische Säure steht, wobei n für eine ganze oder gebrochene Zahl von 0 bis 4 steht und es sich bei dem Katalysator A um Übergangsmetalle und/oder Übergangsmetallverbindungen und/oder Katalysatorsysteme handelt, die sich aus einem Übergangsmetall und/oder einer Übergangsmetallverbindung und mindestens einem Liganden zusammensetzen und es sich bei dem Katalysator B um Peroxide bildende Verbindungen und/oder Peroxoverbindungen und/oder um Azo-Verbindungen handelt

Bevorzugt setzt man die nach Schritt b) erhaltene mono-aminofunktionalisierte Dialkylphosphinsäure, deren Salz oder Ester (III) anschließend in einem Schritt c) mit Metallverbindungen von Mg, Ca, Al, Sb, Sn, Ge, Ti, Fe, Zr, Zn, Ce, Bi, Sr, Mn, Li, Na, K und/oder einer protonierte Stickstoffbase zu den entsprechenden mono-aminofunktionalisierten Dialkylphosphinsäuresalzen (III) dieser Metalle und/oder einer Stickstoffverbindung um.

Bevorzugt sind R¹, R², R³, R⁴, R⁵, R⁶, R⁷, R⁸, R⁹ gleich oder verschieden und bedeuten unabhängig voneinander H, Methyl, Ethyl, n-Propyl, Isopropyl, n-Butyl, Isobutyl, tert. Butyl und/oder Phenyl.

Bevorzugt bedeutet X H, Ca, Mg, Al, Zn, Ti, Fe, Ce, Methyl, Ethyl, n-Propyl, Isopropyl, n-Butyl, Isobutyl, tert. Butyl, Phenyl, Ethylenglykol, Propylglykol, Butylglykol, Pentylglykol, Hexylglykol, Allyl und/oder Glycerin.

Bevorzugt handelt es sich bei den Übergangsmetallen und/oder Übergangsmetallverbindungen um solche aus der siebten und achten Nebengruppe.

Bevorzugt handelt es sich bei den Übergangsmetallen und/oder Übergangsmetallverbindungen um Rhodium, Ruthenium, Nickel, Palladium, Platin.

Bevorzugt handelt es sich bei dem Katalysator B um Wasserstoffperoxid, Natriumperoxid, Lithiumperoxid, Kaliumpersulfat, Natriumpersulfat, Ammoniumpersulfat, Natriumperoxodisulfat, Kaliumperoxoborat, Peressigsäure, Benzoylperoxid, Di-t-butylperoxid und/oder Peroxodischwefelsäure und/oder um Azodiisobutyronitril, 2,2'-Azobis(2-amidinopropan)-dihydrochlorid und/oder 2,2'-Azobis(N,N'-dimethylen-isobutyramidin)-dihydrochlorid.

Bevorzugt handelt es sich bei dem Allylamin (V) um Allylamin, N-Methylallylamin, N,N-Dimethylallylamin, N-(Trimethylsilyl)allylamin, N-Allylanilin, N-Methyl-N-allylanilin, N-Methylallylanilin, 1,1-Dimethylallylamin, 2-Methylallylamin, 3-Phenylallylamin, Allylcyclohexylamin, Diallylamin, Diallylmethylamin, Triallylamin und/oder deren Salze mit Mineralsäuren, Carbonsäuren, Lewissäuren, organische Säuren oder Mischungen dieser Säuren.

Bevorzugt handelt es sich bei dem Alkohol der allgemeinen Formel M-OH um lineare oder verzweigte, gesättigte und ungesättigte, einwertige organische Alkohole mit einer Kohlenstoffkettenlänge von C₁-C₁₈ und bei dem Alkohol der allgemeinen Formel M'-OH um lineare oder verzweigte, gesättigte und ungesättigte, mehrwertige organische Alkohole mit einer Kohlenstoffkettenlänge von C₁-C₁₈.

Die Erfindung betrifft auch die Herstellung von mono-aminofunktionalisierten Dialkylphosphinsäuren, -estern und -salzen nach einem oder mehreren der Ansprüche 1 bis 9 und die anschließende Verwendung dieser Produkte als Zwischenprodukt für weitere Synthesen, als Binder, als Vernetzer bzw. Beschleuniger beim Aushärten von Epoxyharzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen und in Elektronikanwendungen.

Die Erfindung betrifft zudem die Herstellung von mono-aminofunktionalisierten Dialkylphosphinsäuren, -salzen und -estern nach einem oder mehreren der Ansprüche 1 bis 9 und die anschließende Verwendung dieser Produkte als Flammschutzmittel, insbesondere als Flammschutzmittel für Klarlacke und Intumeszenzbeschichtungen, als Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung.

Bevorzugt ist m = 1 bis 10 und k = 2 bis 10.

Bevorzugt ist Y Salzsäure, Schwefelsäure, Salpetersäure oder Phosphorsäure, Phosphonsäure, Phosphinsäure, Ameisensäure, Essigsäure, Propionsäure, Buttersäure, Milchsäure, Palmsäure, Stearinsäure, Malonsäure, Maleinsäure, Fumarsäure, Weinsäure, Zitronensäure, Ascorbinsäure, Trimethylboran, Triethylboran, Tributylboran, Triphenylboran.

Bevorzugt steht n für 0, ¼, ⅓, ½, 1, 2, 3 und 4.

Bevorzugt werden die Katalysatorsysteme A jeweils durch Umsetzung von einem Übergangsmetall und/oder einer Übergangsmetallverbindung und mindestens einem Liganden gebildet.

Die Erfindung betrifft auch flammgeschützte thermoplastische oder duroplastische Polymerformmasse, enthaltend 0,5 bis 45 Gew.-% mono-aminofunktionalisierte Dialkylphosphinsäuren, -salze oder -ester, die nach einem oder mehreren der Ansprüche 1 bis 9 hergestellt wurden, 0,5 bis 95 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Die Erfindung betrifft zuletzt auch flammgeschützte thermoplastische oder duroplastische Polymer-Formkörper, -Filme,- Fäden und -Fasern, enthaltend 0,5 bis 45 Gew.-% mono-aminofunktionalisierte Dialkylphosphinsäuren, -salze oder -ester, die nach einem oder mehreren der Ansprüche 1 bis 9 hergestellt wurden, 0,5 bis 95 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Alle vorgenannten Umsetzungen können auch stufenweise ausgeführt werden; ebenso können in den verschiedenen Verfahrensschritten auch die jeweiligen resultierenden Reaktionslösungen eingesetzt werden.

Handelt es sich bei der mono-aminofunktionalisierten Dialkylphosphinsäure (III) nach Schritt c) um einen Ester, so kann bevorzugt eine saure oder basische Hydrolyse durchgeführt werden, um die freie mono-aminofunktionalisierte Dialkylphosphinsäure oder deren Salz zu erhalten.

Bevorzugt handelt es sich bei den herzustellenden Zielverbindungen, d. h. den mono-aminofunktionalisierten Dialkylphosphinsäuren um 3-(Ethylhydroxyphosphinyl)-1-aminopropan, 3-(Propylhydroxyphosphinyl)-1-aminopropan, 3-(i-Propylhydroxyphos-phinyl)-1-aminopropan, 3-(Butylhydroxyphosphinyl)-1-aminopropan, 3-(sec-Butyl-hydroxyphosphinyl)-1-aminopropan, 3-(i-Butylhydroxyphosphinyl)-1-aminopropan, 3-(2-Phenylethylhydroxyphosphinyl)-1-aminopropan, 3-(Ethylhydroxyphosphinyl)-2-methyl-1-aminopropan, 3-(Propylhydroxyphosphinyl)-2-methyl-1-aminopropan, 3-(i-Propyl-hydroxyphosphinyl)-2-methyl-1-aminopropan, 3-(Butylhydroxyphosphinyl)-2-methyl-1-aminopropan, 3-(sec-Butylhydroxyphosphinyl)-2-methyl-1-aminopropan, 3-(i-Butyl-hydroxy-phosphinyl)-2-methyl-1-aminopropan, 3-(2-Phenylethylhydroxyphosphinyl)-2-methyl-1-aminopropan,3-(Ethylhydroxyphosphinyl)-3-phenyl-1-aminopropan, 3-(Propylhydroxyphosphinyl)-3-phenyl-1-aminopropan, 3-(i-Propylhydroxyphosphinyl)-3-phenyl-1-aminopropan, 3-(Butylhydroxyphosphinyl)-3-phenyl-1-aminopropan, 3-(sec-Butylhydroxyphosphinyl)-3-phenyl-1-aminopropan, 3-(i-Butylhydroxyphosphinyl)-3-phenyl-1-aminopropan, 3-(2-Phenylethylhydroxyphosphinyl)-3-phenyl-1-aminopropan; bei den Estern um Methyl-, Ethyl-; i-Propyl-; Butyl-; Phenyl-, 2-Hydroxyethyl-, 2-Hydroxypropyl-, 3-Hydroxypropyl-, 4-Hydroxybutyl- und/oder 2,3-Dihydroxypropylester der vorgenannten mono-aminofunktionalisierten Dialkylphosphinsäuren und bei den Salzen ein Aluminium(III)-, Calcium(II)-, Magnesium (II)-, Cer(III)-, Ti(IV)- und/oder Zink(II)salz der vorgenannten mono-aminofunktionalisierten Dialkylphosphinsäuren.

Bevorzugt ist die Aminofunktionalität der oben genannten mono-aminofunktionalisierten Dialkylphosphinsäuren, deren Salze und Ester der Formel (III) ein "freies" Amin oder bildet mit Mineralsäuren, Carbonsäuren, Lewissäuren, ogranischen Säuren oder Mischungen dieser Säuren Ammoniumsalze.

Bevorzugte Mineralsäuren sind beispielsweise Salzsäure, Schwefelsäure, Salpetersäure oder Phosphorsäure, Phosphonsäure, Phosphinsäure.

Bevorzugte Carbonsäuren sind beispielsweise Ameisensäure, Essigsäure, Propionsäure, Buttersäure, Milchsäure, Palmsäure, Stearinsäure, Malonsäure, Maleinsäure, Fumarsäure, Weinsäure, Zitronensäure, Ascorbinsäure.

Bevorzugte Lewissäuren sind Borane, wie beispielsweise Diboran, Trialkylborane, wie beispielsweise Trimethylboran, Triethylboran, Tributylboran, Triarylborane, wie beispielsweise Triphenylboran.

Bevorzugt handelt es sich bei den Übergangsmetallen für den Katalysator A um Elemente der siebten und achten Nebengruppe (nach moderner Nomenklatur ein Metall der Gruppe 7, 8, 9 oder 10), wie etwa Rhenium, Ruthenium, Cobalt, Rhodium, Iridium, Nickel, Palladium und Platin.

Bevorzugt werden als Quelle der Übergangsmetalle und Übergangsmetallverbindungen deren Metallsalze verwendet. Geeignete Salze sind solche von Mineralsäuren, die die Anionen Fluorid, Chlorid, Bromid, lodid, Fluorat, Chlorat, Bromat, lodat, Fluorit, Chlorit, Bromit, lodit, Hypofluorit, Hypochlorit, Hypobromit, Hypoiodit, Perfluorat, Perchlorat, Perbromat, Periodat, Cyanid, Cyanat, Nitrat, Nitrid, Nitrit, Oxid, Hydroxid, Borat, Sulfat, Sulfit, Sulfid, Persulfat, Thiosulfat, Sulfamat, Phosphat, Phosphit, Hypophosphit, Phosphid, Carbonat und Sulfonat, wie etwa Methansulfonat, Chlorosulfonat, Fluorosulfonat, Trifluoromethansulfonat, Benzolsulfonat, Naphthylsulfonat, Toluolsulfonat, t-Butylsulfonat, 2-Hydroxypropansulfonat und sulfonierte Ionentauscherharze; und/oder organische Salze, wie etwa Acetylacetonate und Salze einer Carbonsäure mit bis zu 20 Kohlenstoffatomen, wie etwa Format, Acetat, Propionat, Butyrat, Oxalat, Stearat und Zitrat einschliesslich halogenierter Carbonsäuren mit bis zu 20 Kohlenstoffatomen, wie etwa Trifluoracetat, Trichloracetat, enthalten.

Eine weitere Quelle der Übergangsmetalle und Übergangsmetallverbindungen stellen Salze der Übergangsmetalle mit Tetraphenylborat- und halogenierten Tetraphenylboratanionen, wie etwa Perfluorophenylborat, dar.

Geeignete Salze beeinhalten ebenso Doppelsalze und Komplexsalze bestehend aus einem oder mehreren Übergangsmetallionen und unabhängig voneinander ein oder mehrere Alkalimetall-, Erdalkalimetall-, Ammonium-, organische Ammonium-, Phosphonium- und organische Phosphoniumionen und unabhängig voneinander ein oder mehrere oben genannter Anionen. Geeignete Doppelsalze stellen z. B. Ammoniumhexachloropalladat und Ammoniumtetrachloropalladat dar.

Bevorzugt ist eine Quelle der Übergangsmetalle das Übergangsmetall als Element und/oder eine Übergangsmetallverbindung in dessen null-wertigem Zustand.

Bevorzugt wird das Übergangsmetall metallisch eingesetzt oder als Legierung mit weiteren Metallen verwendet, wobei hier bevorzugt Bor, Zirconium, Tantal, Wolfram, Rhenium, Kobalt, Iridium, Nickel, Palladium, Platin und/oder Gold ist. Dabei ist der Übergangsmetallgehalt in der eingesetzten Legierung bevorzugt 45 - 99,95 Gew.-%.

Bevorzugt wird das Übergangsmetall mikrodispers (Teilchengröße 0,1 mm-100 µm) eingesetzt.

Bevorzugt wird das Übergangsmetall auf einem Metalloxid wie etwa Aluminiumoxid, Siliciumdioxid, Titandioxid, Zirkoniumdioxid, Zinkoxid, Nickeloxid, Vanadiumoxid, Chromoxid, Magnesiumoxid, Celite^{®}, Kieselgur, auf einem Metallcarbonat wie etwa Bariumcarbonat, Calciumcarbonat, Strontiumcarbonat, auf einem Metallsulfat wie etwa Bariumsulfat, Calciumsulfat, Strontiumsulfat, auf einem Metallphosphat wie etwa Aluminiumphosphat, Vanadiumphosphat, auf einem Metallcarbid wie etwa Siliconcarbid, auf einem Metallaluminat wie etwa Calciumaluminat, auf einem Metallsilikat wie etwa Aluminiumsilikat, Kreiden, Zeolithe, Bentonit, Montmorillonit, Hectorit, auf funktionalisierten Silikaten, funktionalisierten Silikagelen wie etwa SiliaBond^{®}, QuadraSil™, auf funktionalisierten Polysiloxanen wie etwa Deloxan^{®}, auf einem Metallnitrid, auf Kohle, Aktivkohle, Mullite, Bauxite, Antimonite, Scheelite, Perovskite, Hydrotalcite, Heteropolyanionen, auf funktionalisierter und unfunktionalisierter Cellulose, Chitosan, Keratin, Heteropolyanionen, auf lonentauschern wie etwa Amberlite™, Amberjet™, Ambersep™, Dowex^{®}, Lewatit^{®}, ScavNet^{®}, auf funktionalisierten Polymeren wie etwa Chelex^{®}, QuadraPure™, Smopex^{®}, PolyOrgs^{Ⓡ}, auf polymergebundenen Phosphanen, Phosphanoxiden, Phosphinaten, Phosphonaten, Phosphaten, Aminen, Ammoniumsalzen, Amiden, Thioamiden, Harnstoffen, Thioharnstoffen, Triazinen, Imidazolen, Pyrazolen, Pyridinen, Pyrimidinen, Pyrazinen, Thiolen, Thiolether, Thiolester, Alkoholen, Alkoxiden, Ether, Ester, Carbonsäuren, Acetaten, Acetalen, Peptiden, Hetarenen, Polyethylenimin/Siliciumdioxid und/oder Dendrimeren geträgert verwendet.

Geeignete Quellen der Metallsalze und/oder Übergangsmetalle stellen bevorzugt ebenfalls deren Komplexverbindungen dar. Komplexverbindungen der Metallsalze und/oder Übergangsmetalle setzen sich aus den Metallsalzen bzw. Übergangsmetalle und einem oder mehreren Komplexbildnern zusammen. Geeignete Komplexbildner sind z. B. Olefine, Diolefine, Nitrile, Dinitrile, Kohlenmonoxid, Phosphine, Diphosphine, Phosphite, Diphosphite, Dibenzylidenaceton, Cyclopentadienyl, Indenyl oder Styrol. Geeignete Komplexverbindungen der Metallsalze und/oder Übergangsmetalle können auf den oben genannten Trägermaterialien geträgert sein.

Bevorzugt ist der Gehalt an den genannten geträgerten Übergangsmetallen 0,01 bis 20 Gew.-%, vorzugsweise 0,1 bis 10 Gew.-%, insbesondere 0,2 bis 5 Gew.-%, bezogen auf die Gesamtmasse des Trägermaterials.

Geeignete Quellen von Übergangsmetallen und Übergangsmetallverbindungen sind beispielsweise Palladium, Platin, Nickel, Rhodium; Palladium Platin, Nickel oder Rhodium,auf Alumina, auf Silika, auf Bariumcarbonat, auf Bariumsulfat, auf Calciumcarbonat, auf Strontiumcarbonat, auf Kohle, auf Aktivkohle; Platin-Palladium-Gold-, Aluminum-Nickel-, Eisen-Nickel-, Lanthanoid-Nickel, Zirconium-Nickel-, Platin-Iridium-, Platin-Rhodium-Legierung; Raney^{®}-Nickel, Nickel-Zink-Eisen-Oxid; Palladium(II)-, Nickel(II)- ,Platin(II)-, Rhodiumchlorid, -bromid, -iodid, -fluorid, -hydrid, -oxid, -peroxid, -cyanid, -sulfat, -nitrat, -phosphid, -borid, -chromoxid, -cobaltoxid, -carbonathydroxid, -cyclohexanbutyrat, -hydroxid, -molybdat, -octanoat, -oxalat, -perchlorat, -phthalocyanin, -5,9,14,18,23,27,32,36-octabutoxy-2,3-naphthalocyanin, -sulfamat, -perchlorat, -thiocyanat, -bis(2,2,6,6-tetramethyl-3,5-heptanedionat), -propionat, -acetat, -stearat, -2-ethylhexanoat, -acetylacetonat, -hexafluoro-acetylacetonat, -tetrafluoroborat, -thiosulfat, -trifluoroacetat, -phthalocyanintetra-sulfonsäure Tetranatriumsalz, -methyl, -cyclopentadienyl, -methylcyclopentadienyl, -ethylcyclopentadienyl, -pentamethylcyclopentadienyl, -2,3,7,8,12,13,17,18-octaethyl-21H,23H-porphin, -5,10,15,20-tetraphenyl-21 H,23H-porphin, -bis(5-[[4-(dimethylamino)phenyl]imino]-8(5H)-quinolinon), -2,11,20,29-tetra-tert-butyl-2,3-naphthalocyanin, -2,9,16,23-tetraphenoxy-29H,31H-phthalocyanin, -5,10,15,20-tetrakis(pentafluorophenyl)-21 H,23H-porphin und deren 1,4-Bis(diphenylphos-phin)butan-, 1,3-Bis(diphenylphosphino)propan-, 2-(2'-Di-tert-butylphosphin)biphenyl-, Acetonitril-, Benzonitril-, Ethylendiamin-, Chloroform-, 1,2-Bis(phenyl-sulfinyl)ethan-, 1,3-Bis(2,6-diisopropylphenyl)imidazoliden)(3-chloropyridyl)-, 2'-(Dimethylamino)-2-biphenylyl-, Dinorbornylphosphin-, 2-(Dimethylamino-methyl)ferrocen-, Allyl-, Bis(Diphenylphosphino)butan-, (N-succinimidyl)bis-(triphenylphosphin)-, Dimethylphenylphosphin-, Methyldiphenylphosphin-, 1,10-Phenanthrolin-, 1,5-Cyclo-octadien-, N,N,N',N'-Tetramethylethylendiamin-, Triphenyl-phosphin-, Tri-o-tolylphos-phin-, Tricyclohexylphosphin-, Tributylphosphin-, Triethylphosphin-, 2,2'-Bis(diphenyl-phosphino)-1,1'-binaphthyl-, 1,3-Bis(2,6-diisopropylphenyl)imidazol-2-yliden-, 1,3-Bis(mesityl)imidazol-2-yliden-, 1,1'-Bis(diphenylphosphino)ferrocen-, 1,2-Bis(diphenylphosphino)ethan-, N-Methylimidazol-, 2,2'-Bipyridin-, (Bicyclo[2.2.1]-hepta-2,5-dien)-, Bis(di-tert-butyl(4-dimethylaminophenyl)phosphin)-, Bis(tert.-butylisocyanid)-, 2-Methoxyethylether-, Ethylenglycoldimethylether-, 1,2-Dimethoxy-ethan-, Bis(1,3-diamino-2-propanol)-, Bis(N,N-diethylethylendiamin)-, 1,2-Diamino-cyclohexan-, Pyridin-, 2,2':6',2"-terpyridin-, Diethylsulfid-, Ethylen-,Amin-Komplexe; Kalium-, Natrium-, Ammoniumhexachloropalladat(IV), Kalium-, Natrium-, Ammoniumtetrachloropalladat(II), Bromo(tri-tert-butylphosphin)palladium(I) Dimer, (2-Methyl-allyl)palladium(II)chlorid Dimer, Bis(dibenzylidenaceton)palladium(0), Tris(dibenzylidenaceton)dipalladium(0), Tetrakis(triphenylphosphin)palladium(0), Tetrakis-(tricyclohexylphosphin)palladium (0), Bis[1,2-bis(diphenylphos-phin)ethan]-palladium(0), Bis(3,5,3',5'-dimethoxydibenzylidenaceton)palladium(0), Bis(tri-tert-butylphos-phin)palladium(0), meso-Tetraphenyltetrabenzoporphin Palladium, Tetrakis(methyl-diphenylphosphin)palladium(0), Tris(3,3',3"-phophinidyn-tris(benzol-sulfonato)palladium(0) Nonanatriumsalz, 1,3-Bis(2,4,6-trimethylphenyl)-imidazol-2-yliden(1,4-naphthoquinon)palladium(0), 1,3-Bis(2,6-diisopropylphenyl)-imidazol-2-yliden(1,4-naphthoquinon)palladium(0), und deren Chloroform-Komplex; Allylnickel(II)chlorid Dimer, Ammoniumnickel(II)sulfat, Bis(1,5-cyclooctadien)nickel(0), Bis(triphenylphosphin)dicarbonylnickel(0), Tetrakis(triphenylphosphin)nickel(0), Tetrakis(triphenylphosphit)nickel(0), Kaliumhexaftuoronickelat(IV), Kaliumtetracyanonickelat(II), Kaliumnickel(IV)paraperiodat, Dilithiumtetrabromonickelat(II), Kaliumtetracyanonickelat(II); Platin(IV)chlorid, -oxid, -sulfid, Kalium-, Natrium-, Ammoniumhexachloroplatinat(IV), Kalium-, Ammoniumtetrachloroplatinat(II), Kaliumtetracyanoplatinat(II), Trimethyl(methylcyclopentadienyl)platin(IV), cis-Diammintetrachloroplatin(IV), Kaliumtrichloro(ethylen)platinat(II), Natriumhexahydroxyplatinat(IV), Tetraaminplatin(II)tetrachloroplatinat(II), Tetrabutylammoniumhexachloroplatinat(IV), Ethylenbis(triphenylphosphin)platin(0), Platin(0)-1,3-divinyl-1,1,3,3-tetramethyldisiloxan, Platin(0)-2,4,6,8-tetramethyl-2,4,6,8-tetravinylcyclotetrasiloxan, Tetrakis(triphenyl-phosphin)platin(0), Platinoctaethylporphyrin, Chloroplatinsäure, Carboplatin; Chlorobis(ethylen)rhodium Dimer, Hexarhodiumhexadecacarbonyl, Chloro(1,5-cyclooctadien)rhodium Dimer, Chloro(norbomadien)-rhodium Dimer, Chloro(1,5-hexadien)rhodium Dimer.

Bevorzugt handelt es sich bei den Liganden um Phosphine der Formel (VI)

PR¹¹₃ (VI)

in der die Reste R¹¹ unabhängig voneinander für Wasserstoff, geradkettiges, verzweigtes oder cyclisches C₁-C₂₀-Alkyl, C₁-C₂₀-Alkylaryl, C₂-C₂₀-Alkenyl, C₂-C₂₀-Alkinyl, C₁-C₂₀-Carboxyat, C₁-C₂₀-Alkoxy, C₁-C₂₀-Alkenyloxy, C₁-C₂₀-Alkinyloxy, C₂-C₂₀-Alkoxy-carbonyl, C₁-C₂₀-Alkylthio, C₁-C₂₀-Alkylsulfonyl, C₁-C₂₀-Alkylsulfinyl, Silyl und/oder deren Derivative und/oder durch wenigstens ein R¹² substituiertes Phenyl- oder durch wenigstens ein R¹² substituiertes Naphtyl stehen. R¹² steht unabhängig voneinander für Wasserstoff, Fluor, Chlor, Brom, Iod, NH₂, Nitro, Hydroxy, Cyano, Formyl, geradkettiges, verzweigtes oder cyclisches C₁-C₂₀-Alkyl, C₁-C₂₀-Alkoxy, HN(C₁-C₂₀-Alkyl), N(C₁-C₂₀-Alkyl)₂, -CO₂-(C₁-C₂₀-Alkyl), -CON(C₁-C₂₀-Alkyl)₂, -OCO(C₁-C₂₀-Alkyl), NHCO(C₁-C₂₀-Alkyl), C₁-C₂₀-Acyl, -SO₃M, -SO₂N(R¹³)M, -CO₂M, -PO₃M₂, -AsO₃M₂, -SiO₂M, -C(CF₃)₂OM (M = H, Li, Na oder K), wobei R¹³ Wasserstoff, Fluor, Chlor, Brom, Iod, geradkettiges, verzweigtes oder cyclisches C₁-C₂₀-Alkyl, C₂-C₂₀-Alkenyl, C₂-C₂₀-Alkinyl, C₁-C₂₀-Carboxyat, C₁-C₂₀-Alkoxy, C₁-C₂₀-Alkenyloxy, C₁-C₂₀-Alkinyloxy, C₂-C₂₀-Alkoxycarbonyl, C₁-C₂₀-Alkylthio, C₁-C₂₀-Alkylsulfonyl, C₁-C₂₀-Alkylsulfinyl, Silyl und/oder deren Derivative, Aryl, C₁-C₂₀-Arylalkyl, C₁-C₂₀-Alkylaryl, Phenyl und/oder Biphenyl bedeutet. Vorzugsweise sind alle Gruppen R¹¹ identisch. Geeignete Phosphine (VI) sind beispielsweise Trimethyl-, Triethyl-, Tripropyl-, Triisopropyl-, Tributyl-, Triisobutyl-, Triisopentyl-, Trihexyl-, Tricyclohexyl-, Trioctyl-, Tridecyl-, Triphenyl-, Diphenylmethyl-, Phenyldimethyl-, Tri(o-tolyl)-, Tri(p-tolyl)-, Ethyldiphenyl-, Dicyclohexylphenyl-, 2-Pyridyldiphenyl-, Bis(6-methyl-2pyridyl)-phenyl-, Tri-(p-chlorophenyl)-, Tri-(p-methoxyphenyl)-, Diphenyl(2-sulfonatophenyl)phosphin; Kalium-, Natrium- und Ammoniumsalze von Diphenyl(3-sulfonatophenyl)phosphin, Bis(4,6-dimethyl-3-sulfonatophenyl)(2,4-dimethylphenyl)phosphin, Bis(3-sulfona-tophenyl)phenylphosphinen, Tris(4,6-dimethyl-3-sulfonatophenyl)phosphinen, Tris(2-sulfonatophenyl)phosphinen, Tris(3-sulfonatophenyl)phosphinen; 2-Bis(diphenylphosphinoethyl)trimethyl-ammoniumiodid, 2'-Dicyclohexylphosphino-2,6-dimethoxy-3-sulfonato-1,1'-biphenyl Natriumsalz, Trimethylphosphit und/oder Triphenylphosphit.

Besonders bevorzugt handelt es sich bei den Liganden um bidentate Liganden der allgemeinen Formel

R¹¹M"-Z-M" R¹¹ (VII).

In dieser Formel repräsentieren M" unabhängig voneinander N, P, As oder Sb. Bevorzugt sind die beiden M" gleich und besonders bevorzugt steht M" für ein Phosphoratom.

Jede Gruppe R¹¹ repräsentiert unabhängig voneinander die unter Formel (VI) beschrieben Reste. Vorzugsweise sind alle Gruppen R¹¹ identisch.

Z stellt bevorzugt eine bivalente Überbrückungsgruppe dar, die wenigstens 1 Brückenatom enthält, wobei bevorzugt 2 bis 6 Brückenatome enthalten sind.

Brückenatome können ausgewählt werden aus C-, N-, O-, Si- und S-Atomen. Bevorzugt ist Z eine organische Überbrückungsgruppe, die wenigstens ein Kohlenstoffatom enthält. Bevorzugt ist Z eine organische Überbrückungsgruppe, die 1 bis 6 Brückenatome enthält, wovon wenigstens zwei Kohlenstoffatome sind, die unsubstituiert oder substituiert sein können.

Bevorzugte Gruppen Z sind -CH₂-, -CH₂-CH₂-, -CH₂-CH₂-CH₂-, -CH₂-CH(CH₃)-CH₂-, -CH₂-C(CH₃)₂-CH₂-, -CH₂-C(C₂H₅)-CH₂-, -CH₂-Si(CH₃)₂-CH₂-, -CH₂-O-CH₂-, -CH₂-CH₂-CH₂-CH₂-, -CH₂-CH(C₂H₅)-CH₂-, -CH₂-CH(n-Pr)-CH und -CH₂-CH(n-Bu)-CH₂-, unsubstituierte oder substituierte 1,2-Phenyl-, 1,2-Cyclohexyl-, 1,1'- oder 1,2-Ferrocenyl-Reste, 2,2'-(1,1'-Biphenyl)-, 4,5-Xanthen- und/oder Oxydi-2,1-phenylen-Reste.

Geeignete bidentate Phosphinliganden (VII) sind beispielsweise 1,2-Bis(dimethyl-), 1,2-Bis(diethyl-), 1,2-Bis(dipropyl-), 1,2-Bis(diisopropyl-), 1,2-Bis(dibutyl-), 1,2-Bis(di-tert.-butyl-), 1,2-Bis(dicyclohexyl-) und 1,2-Bis(diphenylphosphino)ethan; 1,3-Bis(dicyclohexyl-), 1,3-Bis(diisopropyl-), 1,3-Bis(di-tert.-butyl-) und 1,3-Bis(diphenylphosphino)propan; 1,4-Bis-(diisopropyl-) und 1,4-Bis(diphenylphosphino)butan; 1,5-Bis(dicyclohexylphosphino)pentan; 1,2-Bis(di-tert.-butyl-), 1,2-Bis(di-phenyl-), 1,2-Bis(di-cyclohexyl-), 1,2-Bis(dicyclo-pentyl-), 1,3-Bis(di-tert.-butyl-), 1,3-Bis(diphenyl-), 1,3 Bis(di-cyclohexyl-) und 1,3-Bis(dicyclopentylphosphino)benzol; 9,9-Dimethyl-4,5-bis(diphenylphos-phino)xanthen, 9,9-Dimethyl-4,5-bis(diphenyl-phosphino)-2,7-di-tert.-butylxanthen, 9,9-Dimethyl-4,5-bis(di-tert.-butylphosphino)xanthen, 1,1'-Bis(diphenylphosphino)-ferrocen, 2,2'-Bis(diphenylphosphino)-1,1'-binaphthyl, 2,2'-Bis(di-p-tolylphosphino)-1,1'-binaphthyl, (Oxydi-2,1-phenylen)bis(di-phenylphosphin), 2,5-(Di-isopropylphospholano)benzol, 2,3-O-Isopropropyliden-2,3-dihydroxy-1,4-bis(diphenylphosphino)butan, 2,2'-Bis(di-tert.-butylphosphino)-1,1'-biphenyl, 2,2'-Bis(dicyclohexylphosphino)-1,1'-biphenyl, 2,2'-Bis(diphenylphosphino)-1,1'-biphenyl, 2-(Di-tert.-butylphosphino)-2'-(N,N-dimethylamino)biphenyl, 2-(Dicyclohexylphosphino)-2'-(N,N-dimethylamino)biphenyl, 2-(Diphenylphos-phino)-2'-(N,N-dimethylamino)biphenyl, 2-(Diphenylphosphino)ethyl-amin, 2-[2-(Diphenylphos-phino)ethyl]pyridin; Kalium-, Natrium- und Ammoniumsalze von 1,2-Bis(di-4-sulfonatophenylphosphino)-benzol, (2,2'-Bis [[bis(3-sulfonato-phenyl)phosphino]methyl]-4,4',7,7'-tetrasulfonato-1,1'-binapthyl, (2,2'-Bis[[bis(3-sulfonatophenyl)phos-phino]methyl]-5,5'-tetrasulfonato-1,1'-biphenyl, (2,2'-Bis [[bis(3-sulfonatophenyl)phos-phino]methyl]-1,1'-binapthyl, (2,2'-Bis[[bis(3-sulfonatophenyl)phosphino]-methyl]-1,1'-biphenyl, 9,9-Dimethyl-4,5-bis(diphenylphosphino)-2,7-sulfonatoxanthen, 9,9-Dimethyl-4,5-bis(di-tert.-butylphosphino)-2,7-sulfonatoxanthen, 1,2-Bis(di-4-sulfonatophenyl-phosphino)-benzol, Meso-tetrakis(4-sulfonatophenyl)porphin, Meso-tetrakis(2,6-dichloro-3-sulfonatophenyl)porphin, Meso-tetrakis(3-sulfonatomesityl)porphin, Tetrakis(4-carboxyphenyl)porphin und 5,11,17,23-Sulfonato-25,26,27,28-tetrahydroxycalix[4]aren. Zudem können die Liganden der Formel (VI) und (VII) durch die Reste R¹¹ und/oder die Überbrückungsgruppe an ein geeignetes Polymer oder anorganisches Substrat gebunden sein.

Das Katalysatorsystem hat ein Übergangsmetall-Ligand-Molverhältnis von 1:0,01 bis 1:100, bevorzugt von 1:0,05 bis 1:10 und insbesondere von 1:1 bis 1:4.

Bevorzugt erfolgen die Umsetzungen in den Verfahrensstufen a), b) und c) wahlweise in einer Atmosphäre, die weitere gasförmige Bestandteile wie zum Beispiel Stickstoff, Sauerstoff, Argon, Kohlendioxid enthält; die Temperatur beträgt -20 bis 340 °C, insbesondere 20 bis 180 °C und der Gesamtdruck von 1 bis 100 bar.

Die Isolierung der Produkte und/oder des Übergangsmetalls und/oder der Übergangsmetallverbindung und/oder Katalysatorsystems und/oder des Liganden und/oder der Edukte nach den Verfahrensstufen a), b) und c) erfolgt wahlweise durch Destillation oder Rektifikation, durch Kristallisation oder Fällen, durch Filtration oder Zentrifugieren, durch Adsorption oder Chromatographie oder anderen bekannten Methoden.

Erfindungsgemäß werden Lösungsmittel, Hilfsmittel und ggf. andere flüchtige Bestandteile durch z. B. Destillation, Filtration und/oder Extraktion abgetrennt.

Bevorzugt erfolgt die Umsetzungen in den Verfahrensstufen a), b) und c) wahlweise in Absorptionskolonnen, Sprühtürmen, Blasensäulen, Rührkesseln, Reiselbettreaktor, Strömumgsrohren, Schlaufenreaktoren und/oder Knetern. Geeignete Mischorgane sind z. B. Anker-, Blatt-, MIG-, Propeller-, Impeller-, Turbinen-, Kreuz-Rührer, Dispergierscheiben, Hohl-(Begasungs-)-Rührer, Rotor-Stator-Mischer, statische Mischer, Venturi-Düsen und/oder Mammutpumpen.

Bevorzugt erfahren die Reaktionslösungen/-mischungen dabei eine Mischintensität, die einer Rotations-Reynolds-Zahl von 1 bis 1.000.000, bevorzugt von 100 bis 100.000 entspricht.

Bevorzugt erfolgt eine intensive Durchmischung der jeweiligen Reaktionspartner etc. unter einem Energieeintrag von 0,080 bis 10 kW/m³, bevorzugt 0,30 - 1,65 kW/m³.

Bevorzugt wirkt der jeweilige Katalysator A während der Umsetzung homogen und/oder heterogen. Daher wirkt der jeweils heterogen wirkende Katalysator während der Umsetzung als Suspension oder an eine feste Phase gebunden.

Bevorzugt wird der jeweilige Katalysator A vor der Umsetzung und/oder zu Beginn der Umsetzung und/oder während der Umsetzung in situ generiert.

Bevorzugt erfolgt die jeweilige Umsetzung in einem Lösungsmittel als Ein-PhasenSystem in homogener oder heterogener Mischung und/oder in der Gasphase.

Wird ein Mehr-Phasen-System verwendet kann zusätzlich ein Phasentransferkatalysor eingesetzt werden.

Die erfindungsgemäßen Reaktionen können in flüssiger Phase, in der Gasphase oder auch in überkritischer Phase durchgeführt werden. Dabei wird der jeweilige Katalysator A bei Flüssigkeiten vorzugsweise homogen oder als Suspension eingesetzt, während bei Gasphasen- oder überkritischer Fahrweise eine Festbettanordnung von Vorteil ist.

Geeignete Lösungsmittel sind Wasser, Alkohole wie z.B. Methanol, Ethanol, i-Propanol, n-Propanol, n-Butanol, i-Butanol, t-Butanol, n-Amylalkohol, i-Amylalkohol, t-Amylalkohol, n-Hexanol, n-Octanol, i-Octanol, n-Tridecanol, Benzylalkohol etc. Bevorzugt sind weiterhin Glycole wie z. B. Ethylenglycol, 1,2-Propandiol, 1,3-Propandiol, 1,3-Butandiol, 1,4-Butandiol, Diethylenglycol etc.; aliphatische Kohlenwasserstoffe wie Pentan, Hexan, Heptan, Octan, und Petrolether, Petroleumbenzin, Kerosin, Petroleum, Paraffinöl etc.; aromatische Kohlenwasserstoffe wie Benzol, Toluol, Xylol, Mesitylen, Ethylbenzol, Diethylbenzol etc.; Halogenkohlenwasserstoffe wie Methylenchlorid, Chloroform, 1,2-Dichloroethan, Chlorobenzol, Tetrachlorkohlenstoff, Tetrabromoethylen etc.; alicyclische Kohlenwasserstoffe wie Cyclopentan, Cyclohexan und Methylcyclohexan etc.; Ether wie Anisol (Methylphenylether), t-Butylmethylether, Dibenzylether, Diethylether, Dioxan, Diphenylether, Methylvinylether, Tetrahydrofuran, Triisopropylether etc.; Glycolether wie Diethylenglycoldiethylether, Diethylenglycoldimethylether (Diglyme), Diethylenglycolmonobutylether, Diethylenglycolmonomethylether, 1,2-Dimethoxy-ethan (DME Monoglyme), Ethylenglycolmonobutylether, Triethylenglycoldimethylether (Triglyme), Triethylen-glycolmonomethylether etc.; Ketone wie Aceton, Diisobutylketon, Methyl-n-propylketon; Methylethylketon, Methyl-i-butylketon etc; Ester wie Methylformat, Methylacetat, Ethylacetat, n-Propylacetat und n-Butylacetat etc.; Carbonsäuren wie Ameisensäure, Essigsäure, Propionsäure, Buttersäure etc.; einzeln oder in Kombination miteinander.

Geeignete Lösungsmittel sind auch die eingesetzten Olefine und Phosphinsäurequellen. Diese bieten Vorteile in Form einer höheren Raum-Zeit-Ausbeute.

Bevorzugt wird die Umsetzung unter dem eigenen Dampfdruck des Olefins und/oder des Lösungsmittels durchgeführt.

Bevorzugt sind R¹, R², R³, R⁴ des Olefins (IV) gleich oder verschieden und bedeuten, unabhängig voneinander, H, Methyl, Ethyl, n-Propyl, Isopropyl, n-Butyl, Isobutyl, tert.-Butyl und/oder Phenyl.

Bevorzugt werden auch funktionalisierte Olefine wie Allylisothiocyanat, Allylmethacrylat, 2-Allylphenol, N-Allylthioharnstoff, 2-(Allylthio)-2-thiazolin, Allyltrimethylsillan, Allylacetat, Allylacetoacetat, Allylalkohol, Allylamin, Allylbenzol, Allylcyanid, Allyl-(cyanacetat), Allylanisol, trans-2-Pentenal, cis-2-Pentennitril, 1-Penten-3-ol, 4-Penten-1-ol, 4-Penten-2-ol, trans-2-Hexenal, trans-2-Hexen-1-ol, cis-3-Hexen-1-ol, 5-Hexen-1-ol, Styrol, -Methylstyrol, 4-Methylstyrol, Vinylacetat, 9-Vinylanthracen, 2-Vinylpyridin, 4-Vinylpyridin und 1-Vinyl-2-pyrrolidon eingesetzt.

Bevorzugt erfolgt die Umsetzung bei einem Partialdruck des Olefins von 0,01 - 100 bar, besonders bevorzugt bei einem Partialdruck des Olefins von 0,1 - 10 bar.

Bevorzugt erfolgt die Umsetzung in einem Phosphinsäure-Olefin-Molverhältnis von 1:10.000 bis 1:0,001, besonders bevorzugt im Verhältnis von 1:30 bis 1:0,01.

Bevorzugt erfolgt die Umsetzung in einem Phosphinsäure-Katalysator-Molverhältnis von 1:1 bis 1:0,00000001, besonders bevorzugt bei 1:0,01 bis 1:0,000001.
Bevorzugt erfolgt die Umsetzung in einem Phosphinsäure-Lösungsmittel-Molverhältnis von 1:10.000 bis 1:0, besonders bevorzugt bei 1:50 bis 1:1.

Ein erfindungsgemäßes Verfahren zur Herstellung von Verbindungen der Formel (II) ist dadurch gekennzeichnet, dass man eine Phosphinsäurequelle mit Olefinen in Gegenwart eines Katalysators umsetzt und das Produkt (II) (Alkylphosphonigsäure bzw. -salze, -ester) von Katalysator, Übergangsmetall bzw. Übergangsmetallverbindung, Ligand, Komplexbildner, Salzen und Nebenprodukten befreit wird.

Erfindungsgemäß wird der Katalysator, das Katalysatorsystem, das Übergangsmetall und/oder die Übergangsmetallverbindung abgetrennt durch Zugabe eines Hilfsmittels 1 und Entfernen des Katalysators, des Katalysatorsystems, des Übergangsmetalls und/oder der Übergangsmetallverbindung durch Extraktion und/oder Filtration.

Erfindungsgemäß wird der Ligand und/oder Komplexbildner durch Extraktion mit Hilfsmittel 2 und/oder Destillation mit Hilfsmittel 2 abgetrennt.

Hilfsmittel 1 ist bevorzugt Wasser und/oder mindestens ein Vertreter der Familie der Metallfänger (Metal Scavenger). Bevorzugte Metallfänger sind Metalloxide wie etwa Aluminiumoxid, Siliciumdioxid, Titandioxid, Zirkoniumdioxid, Zinkoxid, Nickeloxid, Vanadiumoxid, Chromoxid, Magnesiumoxid, Celite^{Ⓡ}, Kieselgur; Metallcarbonate wie etwa Bariumcarbonat, Calciumcarbonat, Strontiumcarbonat; Metallsulfate wie etwa Bariumsulfat, Calciumsulfat, Strontiumsulfat; Metallphosphate wie etwa Aluminiumphosphat, VanadiumphosphatM Metallcarbide wie etwa Siliconcarbid; Metallaluminate wie etwa Calciumaluminat; Metallsilikate wie etwa Aluminiumsilikat, Kreiden, Zeolithe, Bentonit, Montmorillonit, Hectorit; funktionalisierte Silikate, funktionalisierte Silikagele wie etwa SiliaBond^{®}, QuadraSil™; funktionalisierte Polysiloxane wie etwa Deloxan^{Ⓡ}; Metallnitride, Kohle, Aktivkohle, Mullite, Bauxite, Antimonite, Scheelite, Perovskite, Hydrotalcite, funktionalisierte und unfunktionalisierte Cellulose, Chitosan, Keratin, Heteropolyanionen, lonentauscher wie etwa Amberlite™, Amberjet™, Ambersep™, Dowex^{®}, Lewatit^{Ⓡ}, ScavNet^{Ⓡ}; funktionalisierte Polymere wie etwa Chelex^{®}, QuadraPure™, Smopex^{®}, PolyOrgs^{Ⓡ}; polymergebundene Phosphane, Phosphanoxide, Phosphinate, Phosphonate, Phosphate, Amine, Ammoniumsalze, Amide, Thioamide, Harnstoffe, Thioharnstoffe, Triazine, Imidazole, Pyrazole, Pyridine, Pyrimidine, Pyrazine, Thiole, Thiolether, Thiolester, Alkohole, Alkoxide, Ether, Ester, Carbonsäuren, Acetate, Acetale, Peptide, Hetarene, Polyethylenimin/Siliciumdioxid und/oder Dendrimere.

Bevorzugt wird Hilfsmittel 1 in Mengen zugesetzt, die einer 0,1 - 40 gew.-%igen Beladung des Metalls auf dem Hilfsmittel 1 entsprechen. Bevorzugt wird Hilfsmittel 1 bei Temperaturen von 20 - 90 °C eingesetzt. Bevorzugt beträgt die Verweilzeit von Hilfsmittel 1 0,5 - 360 Minuten.

Hilfsmittel 2 ist bevorzugt das vorgenannte, erfindungsgemäße Lösungsmittel wie sie bevorzugt in der Verfahrensstufe a) eingesetzt werden.

Die Veresterung der mono-aminofunktionalisierten Dialkylphosphinsäure (III) bzw. der Alkylphosphonigsäuredrivate (II) sowie der Phosphinsäurequelle (I) zu den entsprechenden Estern kann beispielsweise durch Umsetzung mit höhersiedenden Alkoholen unter Entfernung des gebildeten Wassers durch Azeotropdestillation oder durch Umsetzung mit Epoxiden (Alkylenoxiden) erreicht werden.

Bevorzugt wird hierbei nach Schritt a) die Alkylphosphonigsäure (II) mit einem Alkohol der allgemeinen Formel M-OH und/oder M'-OH oder durch Umsetzung mit Alkylenoxiden, wie nachfolgend angeführt, direkt verestert.

Bevorzugt sind M-OH primäre, sekundäre oder tertiäre Alkohole mit einer Kohlenstoffkettenlänge von C₁-C₁₈. Besonders bevorzugt sind Methanol, Ethanol, Propanol, Isopropanol, n-Butanol, 2-Butanol, tert.-Butanol, Amylalkohol und/oder Hexanol.

Bevorzugt sind M'-OH Ethylenglykol, 1,2-Propylenglykol, 1,3-Propylenglykol, 1,4-Butandiol, 2,2-Dimethylpropan-1,3-diol, Neopentylglykol, 1,6-Hexandiol, 1,4-Cyclohexandimethanol, Glycerin, Trishydroxymethylethan, Trishydroxymethylpropan, Pentaerythrit, Sorbit, Mannit, α-Naphthol, Polyethylenglykole, Polypropylenglykole und/oder EO-PO-Blockpolymere.

Geeignet sind als M-OH und M'-OH auch ein- oder mehrwertige, ungesättigte Alkohole mit einer Kohlenstoffkettenlänge von C₁-C₁₈, etwa n-Buten-2-ol-1, 1,4-Butendiol und Allylalkohol.

Geeignet sind als M-OH und M'-OH auch Umsetzungsprodukte von einwertigen Alkoholen mit einem oder mehreren Molekülen von Alkylenoxiden, bevorzugt mit Ethylenoxid und/oder 1,2-Propylenoxid. Bevorzugt sind 2-Methoxyethanol, 2-Ethoxyethanol, 2-n-Butoxyethanol, 2-(2'-Ethyl-hexyloxy)-ethanol, 2-n-Dodecoxyethanol, Methyldiglykol, Ethyldiglykol, Isopropyldiglykol, Fettalkoholpolyglykolether und Arylpolyglykolether.

Bevorzugt sind M-OH und M'-OH auch Umsetzungsprodukte von mehrwertigen Alkoholen mit einem oder mehreren Molekülen Alkylenoxid, insbesondere Diglykol und Triglykol sowie Addukte von 1 bis 6 Molekülen Ethylenoxid oder Propylenoxid an Glycerin, Trishydroxymethylpropan oder Pentaerythrit.

Als M-OH und M'-OH können auch Umsetzungsprodukte von Wasser mit einem oder mehreren Molekülen Alkylenoxid eingesetzt werden. Bevorzugt sind Polyethylenglykole und Poly-1,2-propylenglykole verschiedener Molekulargrößen mit einem mittleren Molgewicht von 100 - 1000 g/mol, besonders bevorzugt von 150 - 350 g/mol.

Bevorzugt sind als M-OH und M'-OH auch Umsetzungsprodukte von Ethylenoxid mit Poly-1,2-propylenglykolen oder Fettalkoholpropylenglykole; ebenso Umsetzungsprodukte von 1,2-Propylenoxid mit Polyethylenglykolen oder Fettalkoholethoxylaten. Bevorzugt sind solche Umsetzungsprodukte mit einem mittleren Molgewicht von 100 - 1000 g/mol, besonders bevorzugt von 150 - 450 g/mol.

Einsetzbar sind als M-OH und M'-OH auch Umsetzungsprodukte von Alkylenoxiden mit Ammoniak, primären oder sekundären Aminen, Schwefelwasserstoff, Merkaptanen, Sauerstoffsäuren des Phosphors und C₂-C₆-Dicarbonsäuren. Geeignete Umsetzungs-produkte von Ethylenoxid mit Stickstoffverbindungen sind Triethanolamin, Methyl-diethanolamin, n-Butyldiethanolamin, n-Dodecyldiethanolamin, Dimethylethanolamin, n-Butylmethylethanolamin, Di-n-butylethanolamin, n-Dodecylmethylethanolamin, Tetrahydroxyethylethylendiamin oder Pentahydroxyethyldiethylentriamin. Bevorzugte Alkylenoxide sind Ethylenoxid, 1,2-Propylenoxid, 1,2-Epoxybutan, 1,2-Epoxyethylbenzol, (2,3-Epoxypropyl)benzol, 2,3-Epoxy-1-propanol und 3,4-Epoxy-1-buten.

Geeignete Lösungsmittel sind die in Verfahrensschritt a) genannten Lösungsmittel und auch die eingesetzten Alkohole M-OH, M'-OH und die Alkylenoxide. Diese bieten Vorteile in Form einer höheren Raum-Zeit-Ausbeute.

Bevorzugt wird die Umsetzung unter dem eigenen Dampfdruck des eingesetzten Alkohols M-OH, M'-OH und Alkylenoxids und/oder des Lösungsmittels durchgeführt.

Bevorzugt erfolgt die Umsetzung bei einem Partialdruck des eingesetzten Alkohols M-OH, M'-OH und Alkylenoxids von 0,01 - 100 bar, besonders bevorzugt bei einem Partialdruck des Alkohols von 0,1 - 10 bar.

Bevorzugt wird die Umsetzung bei einer Temperatur von -20 bis 340 °C durchgeführt, besonders bevorzugt bei einer Temperatur von 20 bis 180 °C.

Bevorzugt erfolgt die Umsetzung bei einem Gesamtdruck von 1 bis 100 bar.

Bevorzugt erfolgt die Umsetzung in einem Molverhältnis der Alkohol- bzw. Alkylenoxidkomponente zu der Phosphinsäurequelle (I) bzw.
Alkylphosphonigsäure (II) bzw. mono-aminofunktionalisierte Dialkylphosphinsäure (III) von 10.000:1 bis 0,001:1, besonders bevorzugt im Verhältnis von 1000:1 bis 0,01:1.

Bevorzugt erfolgt die Umsetzung in einem Molverhältnis der Phosphinsäurequelle (I) bzw. Alkylphosphonigsäure (II) bzw. mono-aminofunktionalisierte Dialkylphosphinsäure (III) zum Lösungsmittel von 1:10.000 bis 1:0, besonders bevorzugt in einem Phosphinsäure-Lösungsmittel-Molverhältnis von 1:50 bis 1:1.

Besonders bevorzugte Katalysatoren B, wie sie in der Verfahrensstufe b) eingesetzt werden, sind Peroxo-Verbindungen wie Peroxomonoschwefelsäure, Kaliummonopersulfat (Kaliumperoxomonosulfat), Caroat(TM), Oxone(TM), Peroxodischwefelsäure, Kaliumpersulfat (Kaliumperoxodisulfat), Natriumpersulfat (Natriumperoxodisulfat), Ammoniumpersulfat (Ammoniumperoxodisulfat). Besonders bevorzugte Katalysatoren B sind Verbindungen, die im Lösemittelsystem Peroxide bilden können wie Natriumperoxid, -hydrate, Lithiumperoxid, -hydrate, Calciumperoxid, Strontiumperoxid, Bariumperoxid, Magnesiumperoxid, Zinkperoxid, Kaliumhyperoxid, -hydrate, Natriumperoxoborat, -hydrate, Kaliumperoxoborat-peroxohydrat, Magnesiumperoxoborat, Calciumperoxoborat, Bariumperoxoborat, Strontiumperoxoborat, Kaliumperoxoborat, Peroxomonophosphorsäure, Peroxodiphosphorsäure, Kaliumperoxodiphosphat, Ammoniumperoxodiphosphat, Kaliumammoniumperoxodiphosphate (Doppelsalz), Natriumcarbonatperoxohydrat, Harnstoffperoxohydrat, Ammoniumoxalatperoxid, Bariumperoxidperoxohydrat, Bariumperoxidperoxohydrat, Calciumhydrogenperoxide, Calciumperoxidperoxohydrat, Ammoniumtriphosphatdiperoxophosphathydrat, Kaliumfluoridperoxohydrat, Kaliumfluoridtriperoxohydrat, Kaliumfluoriddiperoxohydrat, Natriumpyrophosphatdiperoxohydrat, Natriumpyrophosphatdiperoxohydratoctahydrat, Kaliumacetatperoxohydrat, Natriumphosphatperoxohydrat, Natriumsilicatperoxohydrat.

Bevorzugte Katalysatoren B sind Wasserstoffperoxid, Perameisensäure, Peressigsäure, Benzoylperoxid, Di-t-butylperoxid, Dicumylperoxid, 2,4-Dichlorobenzoylperoxid, Decanoylperoxid, Laurylperoxid, Cumolhydroperoxid, Pinenhydroperoxid, p-Menthanhydroperoxid, t-Butylhydroperoxid, Acetylacetonperoxid, Methylethylketonperoxid, Bemsteinsäureperoxid, Dicetylperoxydicarbonat, t-Butylperoxyacetat, t-Butyl-peroxymaleinsäure, t-Butylperoxybenzoat, Acetylcyclohexylsulfonylperoxid.

Bevorzugte Katalysatoren B sind wasserlösliche Azo-Verbindungen. Besonders bevorzugt sind Azoinitiatoren wie VAZO^{®} 52 2,2'-Azobis(2,4-dimethyl-valeronitril), VAZO^{®} 64 (Azo-bis-(isobutyronitril), AIBN), VAZO^{®} 67 2,2'-Azobis(2-methylbutyronitril), VAZO^{®} 88 1,1'-Azobis(cyclohexan-1-carbonitril), VAZO^{®} 68 der Fa. Dupont-Biesteritz, V-70 2,2'-Azobis(4-methoxy-2,4-dimethylvaleronitril), V-65 2,2'-Azobis(2,4-dimethylvaleronitril), V-601 Dimethyl 2,2'-azobis(2-methylpropionat), V-59 2,2'-Azobis(2-methylbutyronitril), V-40 1,1'-Azobis(cyclohexan-1-carbonitril), VF-096 2,2'-Azobis[N-(2-propenyl)-2-methylpropionamid], V-30 1-[(cyano-1-methylethyl)azo]formamid, VAm-110 2,2'-Azobis(N-butyl-2-methyl-propionamid), VAm-111 2,2'-Azobis(N-cyclohexyl-2-methylpropionamid), VA-046B 2,2'-Azobis[2-(2-imidazolin-2-yl)propan-disulfatdihydrate, VA-057 2,2'-Azobis[N-(2-carboxyethyl)-2-methylpropion-amidin]tetrahydrat, VA-061 2,2'-Azobis[2-(2-imidazolin-2-yl)propan], VA-080 2,2'-Azobis{2-methyl-N-[1,1-bis(hydroxymethyl)-2-hydroxyethyl] propionamid, VA-085 2,2'-Azobis{2-methyl-N-[2-(1-hydroxybuthyl)]propionamid}, VA-086 2,2'-Azobis[2-methyl-N-(2-hydroxyethyl)-propionamid] von Wako Chemicals.

Geeignet sind auch Azoinitiatoren wie 2-tert-Butylazo-2-cyanopropan, Dimethylazo-diisobutyrat, Azodiisobutyronitril, 2-tert-Butylazo-1-cyanocyclohexan, 1-tert-Amylazo-1-cyanocyclohexan. Weiterhin sind bevorzugt Alkylperketale wie 2,2-Bis-(tert-butyl-peroxy)butan, Ethyl-3,3-bis(tert-butylperoxy)butyrat, 1,1-Di-(tert-butylperoxy)cyclohexan.

Bevorzugt wird der Katalysator B in Mengen von 0,05 bis 5 Mol-% bezüglich der jeweiligen Allylamine (V) eingesetzt.

Bevorzugt wird der Katalysator B in Mengen von 0,001 bis 10 mol-%, bezogen auf die phosphorhaltige Verbindung, eingesetzt.

Geeignete Lösungsmittel sind die, wie sie weiter vorne in Verfahrensstufe a) eingesetzt werden.

Bevorzugt wird der Katalysator B mit einer Geschwindigkeit von 0,01 bis 10 mol-% Katalysator pro Stunde, bezogen auf die phosphorhaltige Verbindung, zudosiert.

Bevorzugt erfolgt die Umsetzung der Alkylphosphonigsäuren (II) mit dem Allylamin (V) bei einer Temperatur von 0 bis 250 °C, besonders bevorzugt bei 20 bis 200 °C und insbesondere bei 50 bis 150 °C.

Bevorzugt besteht die Atmosphäre bei der Umsetzung mit dem Allylamin (V) zu 50 bis 99,9 Gew.-% aus Bestandteilen des Lösungsmittels und Allylamin (V), bevorzugt 70 - 95 %.

Bevorzugt erfolgt die Umsetzung während des Zusatzes von Allylamin (V) bei einem Druck von 1 - 20 bar.

In einer weiteren Ausführungsform des Verfahrens wird das nach Verfahrensstufe a) und/oder b) erhaltene Produktgemisch aufgearbeitet.

Die mono-aminofunktionalisierten Dialkylphosphinsäure oder deren Salz (III) kann im Folgenden zu weiteren Metallsalzen umgesetzt werden.

Bevorzugt handelt es sich bei den eingesetzten Metallverbindungen der Verfahrensstufe c) um Verbindungen der Metalle Mg, Ca, Al, Sb, Sn, Ge, Ti, Fe, Zr, Zn, Ce, Bi, Sr, Mn, Li, Na, K, besonders bevorzugt Ca, Al, Ti, Zn, Sn, Ce, Fe.

Geeignete Lösungsmittel für Verfahrensstufe c) sind die, wie sie weiter vorne in Verfahrensstufe a) eingesetzt werden.

Bevorzugt erfolgt die Umsetzung der in Verfahrensstufe c) in wässrigem Medium.

Bevorzugt setzt man in Verfahrensstufe c) die nach Verfahrensstufe b) erhaltenen erhaltene mono-aminofunktionalisierten Dialkylphosphinsäuren, deren Ester und/oder Alkalisalze (III) mit Metallverbindungen von Mg, Ca, Al, Zn, Ti, Sn, Zr, Ce oder Fe zu den mono-aminofunktionalisierten Dialkylphosphinsäuresalzen (III) dieser Metalle um.

Die Umsetzung erfolgt dabei in einem Molverhältnis von monoaminofunktionalisierter Dialkylphosphinsäure/-ester/-salz (III) zu Metall von 8 zu 1 bis 1 zu 3 (für vierwertige Metallionen oder Metalle mit stabiler vierwertiger Oxiationsstufe), von 6 zu 1 bis 1 zu 3 (für dreiwertige Metallionen oder Metalle mit stabiler dreiwertiger Oxidationsstufe), von 4 zu 1 bis 1 zu 3 (für zweiwertige Metallionen oder Metalle mit stabiler zweiwertiger Oxidationsstufe) und von 3 zu 1 bis 1 zu 4 (für einwertige Metallionen oder Metalle mit stabiler einwertiger Oxidationsstufe).
Bevorzugt führt man in Verfahrenstufe b) erhaltenes mono-aminofunktionalisiertes Dialkylphosphinsäureester/-salz (III) in die entsprechende Dialkylphosphinsäure über und setzt in Verfahrensstufe c) diese mit Metallverbindungen von Mg, Ca, Al, Zn, Ti, Sn, Zr, Ce oder Fe zu den mono-aminofunktionalisierten Dialkylphosphinsäuresalzen (III) dieser Metalle um.

Bevorzugt wandelt man in Verfahrenstufe b) erhaltene mono-aminofunktionalisierte Dialkylphosphinsäure/-ester (III) in ein Dialkylphosphinsäure-Alkalisalz um und setzt in Verfahrensstufe c) dieses mit Metallverbindungen von Mg, Ca, Al, Zn, Ti, Sn, Zr, Ce oder Fe zu den mono-aminofunktionalisierten Dialkylphosphinsäuresalzen (III) dieser Metalle um.

Bevorzugt handelt es sich bei den Metallverbindungen von Mg, Ca, Al, Zn, Ti, Sn, Zr, Ce oder Fe für Verfahrenstufe c) um Metalle, Metalloxide, -hydroxide, -oxidhydroxide, -borate, -carbonate, -hydroxocarbonate, -hydroxocarbonathydrate, gemischte -hydroxocarbonate, - gemischte hydroxocarbonathydrate, -phosphate, -sulfate, -sulfat hydrate, -hydroxosulfathydrate, gemischte -hydroxosulfathydrate, oxysulfate, -acetate, -nitrate, fluoride, -fluoridhydrate, -chloride, chloridhydrate, -oxychloride, -bromide, -iodide, -iodid hydrate, -carbonsäurederivate und/oder -alkoxide.

Bevorzugt handelt es sich bei den Metallverbindungen um Aluminiumchlorid, Aluminiumhydroxid, Aluminiumnitrat, Aluminiumsulfat, Titanylsulfat, Zinknitrat, Zinkoxid, Zinkhydroxid und/oder Zinksulfat.

Geeignet sind auch metallisches Aluminium, -fluorid, -hydroxychlorid, -bromid, -iodid, -sulfid, -selenid; -phosphid, -hypophosphit, -antimonid, -nitrid; -carbid, -hexafluorosilicat; -hydrid, -calciumhydrid, -borhydrid; -chlorat; Natrium-Aluminiumsulfat, Aluminium-Kaliumsulfat, Aluminiumammoniumsulfat, -nitrat, -metaphosphat, -phosphat, -silicat, -magnesiumsilicat, -carbonat, -hydrotalcit, -natriumcarbonat, -borat; -thiocyanat; -oxid, -oxidhydroxid, ihre entsprechenden Hydrate und/oder Polyaluminiumhydroxy-verbindungen, die vorzugsweise einen Aluminiumgehalt von 9 bis 40 Gew.-% besitzen.

Geeignet sind auch Aluminiumsalze von Mono-, Di-, Oligo-, Polycarbonsäuren wie z. B. Aluminiumdiacetat, -acetotartrat, -formiat, -lactat, -oxalat, -tartrat, -oleat, -palmitat, -sterarat, -trifluoromethansulfonat, -benzoat,-salicylat, -8-oxychinolat.

Geeignet sind ebenfalls elementares, metallisches Zink sowie Zinksalze wie z. B. Zinkhalogenide (Zinkfluorid, Zinkchloride, Zinkbromid, Zinkiodid).

Geeignet ist auch Zinkborat, -carbonat, -hydroxidcarbonat, -silicat, -hexafluorosilicat, -stannat, -hydroxidstannat, -Magnesium-Aluminium-Hydroxidcarbonat; -nitrat, -nitrit, -phosphat, -pyrophosphat; -sulfat, -phosphid, -selenid, -tellurid und Zinksalze der Oxosäuren der siebten Hauptgruppe (Hypohalogenite, Halogenite, Halogenate, z. B. Zinkiodat, Perhalogenate, z. B. Zinkperchlorat); Zinksalze der Pseudohalogenide (Zinkthiocyanat, -cyanat, -cyanid); Zinkoxide, -peroxide, -hydroxide oder gemischte Zinkoxidhydroxide.

Bevorzugt sind Zinksalze der Oxosäuren der Übergangsmetalle (bspw. Zinkchromat(VI)hydroxyd, -chromit, -molybdat, -permanganat, -molybdat).

Geeignet sind auch Zinksalze von Mono-, Di-, Oligo-, Polycarbonsäuren, wie z. B. Zinkformiat, -acetat, -trifluoracetat, -propionat, -butyrat, -valerat, -caprylat, -oleat, -stearat, -oxalat, -tartrat, -citrat, -benzoat, -salicylat, -lactat, -acrylat, -maleat, -succinat, Salze von Aminosäuren (Glyzin), von sauren Hydroxyfunktionen (Zinkphenolat etc.), Zink-p-phenolsulfonat, -acetylacetonat, -stannat, -dimethyldithiocarbamat, -trifluormethansulfonat.

Bei den Titan-Verbindungen ist metallisches Titan ebenso wie Titan(III) und/oder (IV) -chlorid, -nitrat, -sulfat, -formiat, -acetat, -bromid, -fluorid, -oxychlorid, -oxysulfat, -oxid, -n-propoxid, -n-butoxid, -isopropoxid, -ethoxid, -2-ethylhexyloxid. Geeignet ist auch metallisches Zinn sowie Zinnsalze (Zinn(II) und /oder (IV) -chlorid); Zinnoxide und Zinn-Alkoxid wie z. B. Zinn-(IV)-tert-butoxid.

Geeignet sind auch Cer(III)fluorid, -chlorid, -nitrat.

Bei den Zirkonium-Verbindungen ist metallisches Zirkonium sowie Zirkoniumsalze wie Zirkoniumchlorid, -sulfat, Zirconylacetat, Zirconylchlorid bevorzugt. Weiterhin bevorzugt sind Zirkonoxide sowie Zirkon-(IV)-tert-butoxid.

Bevorzugt erfolgt die Umsetzung in Verfahrensstufe c) bei einem Feststoffgehalt der mono-aminofunktionalisierten Dialkylphosphinsäuresalze von 0,1 bis 70 Gew.-%, bevorzugt 5 bis 40 Gew.-%.

Bevorzugt erfolgt die Umsetzung in Verfahrensstufe c) bei einer Temperatur von 20 bis 250 °C, bevorzugt bei einer Temperatur von 80 bis 120 °C.

Bevorzugt erfolgt die Umsetzung in Verfahrensstufe c) bei einem Druck zwischen 0,01 und 1000 bar, bevorzugt 0,1 bis 100 bar.

Bevorzugt erfolgt die Umsetzung in Verfahrensstufe c) während einer Reaktionszeit von 1*10⁻⁷ bis 1000 h.

Bevorzugt wird das nach der Verfahrensstufe c) durch Filtrieren und/oder Zentrifugieren aus dem Reaktionsgemisch abgetrennte mono-aminofunktionalisierten Dialkylphosphinsäuresalz (III) getrocknet.

Bevorzugt wird das nach Verfahrensstufe b) erhaltene Produktgemisch ohne weitere Reinigung mit den Metallverbindungen umgesetzt.

Bevorzugte Lösungsmittel sind die in Verfahrensschritt a) genannten Lösungsmittel.

Bevorzugt ist die Umsetzung in Verfahrensstufe b) und/oder c) im durch Stufe a) gegebenen Lösungsmittelsystem.

Bevorzugt ist die Umsetzung in Verfahrensstufe c) in einem modifizierten gegebenen Lösungsmittelsystem. Hierfür werden acide Komponenten, Lösevermittler, Schauminhibitoren etc. zugegeben.

In einer weiteren Ausführungsform des Verfahrens wird das nach Verfahrensstufe
a) und/oder b) erhaltene Produktgemisch aufgearbeitet.
   In einer weiteren Ausführungsform des Verfahrens wird das nach Verfahrensstufe b) erhaltene Produktgemisch aufgearbeitet und danach die nach Verfahrensstufe
b) erhaltenen mono-aminofunktionalisierten Dialkylphosphinsäuren und/oder deren Salze oder Ester (III) in Verfahrensstufe c) mit den Metallverbindungen umgesetzt.

Bevorzugt wird das Produktgemisch nach Verfahrensstufe b) aufgearbeitet, indem die mono-aminofunktionalisierten Dialkylphosphinsäuren und/oder deren Salze oder Ester (III) durch Entfernen des Lösungsmittelsystems isoliert werden, z. B. durch Eindampfen.

Bevorzugt weist das mono-aminofunktionalisierte Dialkylphosphinsäuresalz (III) der Metalle Mg, Ca, Al, Zn, Ti, Sn, Zr, Ce oder Fe wahlweise
eine Restfeuchte von 0,01 bis 10 Gew.-%, bevorzugt von 0,1 bis 1 Gew.-%,
eine mittlere Teilchengröße von 0,1 bis 2000 µm, bevorzugt von 10 bis 500 µm,
eine Schüttdichte von 80 bis 800 g/l, bevorzugt von 200 bis 700 g/l,
eine Rieselfähigkeit nach Pfrengle von 0,5 bis 10, bevorzugt von 1 bis 5, auf.

Die Aminofunktionalität der mono-aminofunktionalisierten Dialkylphosphinsäuren, deren Salze und Ester der Formel (III) kann im Folgenden mit Mineralsäuren, Carbonsäuren, Lewissäuren, ogranischen Säuren oder Mischungen dieser Säuren zu weiteren Ammoniumsalzen umgesetzt werden.

Bevorzugt erfolgt die Umsetzung bei einer Temperatur von 0 bis 150 °C, besonders bevorzugt bei einer Temperatur von 20 bis 70 °C.

Geeignete Lösungsmittel sind die, wie sie weiter vorne in Verfahrensstufe a) eingesetzt werden.

Bevorzugte Mineralsäuren sind beispielsweise Salzsäure, Schwefelsäure, Salpetersäure oder Phosphorsäure, Phosphonsäure, Phosphinsäure.

Bevorzugte Carbonsäuren sind beispielsweise Ameisensäure, Essigsäure, Propionsäure, Buttersäure, Milchsäure, Palmsäure, Stearinsäure, Malonsäure, Maleinsäure, Fumarsäure, Weinsäure, Zitronensäure, Ascorbinsäure.

Bevorzugte Lewissäuren sind Borane, wie beispielsweise Diboran, Trialkylboran, wie beispielsweiseTrimethylboran, Triethylboran, Tributylboran, Triarylboran, wie beispielsweise Triphenylboran.

Besonders bevorzugt handelt es sich bei den Ammoniumsalzen um Salze oben genannter mono-aminofunktionalisierten Dialkylphosphinsäuren, deren Salze und Ester mit Salzsäure, Phosphorsäure, Phosphonsäure, Phosphinsäure, Essigsäure, Zitronensäure, Ascorbinsäure, Triphenylboran.

Besonders bevorzugt enthalten die Formkörper, -Filme, -Fäden und -Fasern 5 bis 30 Gew.-% der mono-aminofunktionalisierte Dialkylphosphinsäure/-ester/-salze, hergestellt nach einem oder mehreren der Ansprüche 1 bis 9, 5 bis 90 Gew.-% Polymer oder Mischungen derselben, 5 bis 40 Gew.-% Additive und 5 bis 40 Gew.-% Füllstoff, wobei die Summe der Komponenten immer 100 Gew.-% beträgt.

Bevorzugt handelt es sich bei den Additiven um Antioxidantien, Antistatica, Treibmittel, weitere Flammschutzmittel, Hitzestabilisatoren, Schlagzähmodifikatoren, Prozesshilfsmittel, Gleitmittel, Lichtschutzmittel, Antidrippingmittel, Compatibilizer, Verstärkungsstoffe, Füllstoffe, Keimbildungsmittel, Nukleierungsmittel, Additive zur Lasermarkierung, Hydrolysestabilisatoren, Kettenverlängerer, Farbpigmente, Weichmacher und/oder Plastifizierungsmittel.

Bevorzugt ist ein Flammschutzmittel, enthaltend 0,1 bis 90 Gew.-% der halogenarmen mono-aminofunktionalisierten Dialkylphosphinsäure, -ester und -salze (III) und 0,1 bis 50 Gew.-% weitere Additive, besonders bevorzugt Diole.

Bevorzugte Additive sind auch Aluminiumtrihydrat, Antimonoxid, bromierte aromatische oder cycloaliphatische Kohlenwasserstoffe, Phenole, Ether, Chlorparaffin, Hexachlorocyclopentadien-Adducte, Roter Phosphor, Melaminderivate, Melamincyanurate, Ammoniumpolyphosphate und Magnesiumhydroxid. Bevorzugte Additive sind auch weitere Flammschutzmittel, insbesondere Salze von Dialkylphosphinsäuren.

Insbesondere betrifft die Erfindung die Verwendung der erfindungsgemäßen mono-aminofunktionalisierten Dialkylphosphinsäure, -ester und -salze (III) als Flammschutzmittel bzw. als Zwischenstufe zur Herstellung von Flammschutzmitteln für thermoplastische Polymere wie Polyester, Polystyrol oder Polyamid und für duroplastische Polymere wie ungesättigte Polyesterharze, Epoxidharze, Polyurethane oder Acrylate.

Geeignete Polyester leiten sich von Dicarbonsäuren und deren-Ester und Diolen und/oder von Hydroxycarbonsäuren oder den entsprechenden Lactonen ab. Besonders bevorzugt wird Terephthalsäure und Ethylenglykol, Propan-1,3-diol, Butan-1,3-diol eingesetzt.

Geeignete Polyester sind u.a. Polyethylenterephthalat, Polybutylenterephthalat (Celanex^{®} 2500, Celanex^{®} 2002, Fa Celanese; Ultradur^{®}, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Die folgenden Schritte können mit oder unter Zugabe der erfindungsgemäß hergestellten Verbindungen ausgeführt werden.

Bevorzugt wird zur Herstellung der Formmasse ausgehend von den freien Dicarbonsäure und Diolen zunächst direkt verestert und dann polykondensiert.

Bevorzugt wird ausgehend von Dicarbonsäureestern, insbesondere Dimethylestern, zunächst umgeestert und dann unter Verwendung der hierfür üblichen Katalysatoren polykondensiert.

Bevorzugt können bei der Polyesterherstellung neben den gängigen Katalysatoren auch übliche Additive (Vernetzungsmittel, Mattierungs- und Stabilisierungsmittel, Nukleierungsmittel, Farb- und Füllstoffe etc.) zugesetzt werden. Bevorzugt findet die Veresterung und/oder Umesterung bei der Polyesterherstellung bei Temperaturen von 100 - 300 °C statt, besonders bevorzugt 150 - 250 °C.

Bevorzugt findet die Polykondensation bei der Polyesterherstellung bei Drücken zwischen 0,1 bis 1,5 mbar und Temperaturen von 150 - 450 °C statt, besonders bevorzugt bei 200 - 300 °C.

Die erfindungsgemäß hergestellten flammgeschützten Polyester-Formmassen werden bevorzugt in Polyester-Formkörpern eingesetzt.

Bevorzugte Polyester-Formkörper sind Fäden, Fasern, Folien und Formkörper, die als Dicarbonsäure-Komponente hauptsächlich Terephthalsäure und als Diolkomponente hauptsächlich Ethylenglykol enthalten.

Bevorzugt beträgt der resultierende Phosphorgehalt in aus flammgeschützten Polyester hergestellten Fäden und Fasern 0,1 - 18 Gew.-%, bevorzugt 0,5 - 15 Gew.-% und bei Folien 0,2 - Gew.-15 %, bevorzugt 0,9 - 12 Gew.-%. Geeignete Polystyrole sind Polystyrol, Poly-(p-methylstyrol) und/oder Poly-(alpha-methylstyrol).

Bevorzugt handelt es sich bei den geeigneten Polystyrolen um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den geeeigneten Polystyrolen auch um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als so genannte ABS-, MBS-, ASA- oder AES-Polymere bekannt sind.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2,12, Polyamid 4, Polyamid 4,6, Polyamid 6, Polyamid 6,6, Polyamid 6,9, Polyamid 6,10, Polyamid 6,12, Polyamid 6,66, Polyamid 7,7, Polyamid 8,8, Polyamid 9,9, Polyamid 10,9, Polyamid 10,10 , Polyamid 11, Polyamid 12, usw. Solche Polyamide sind z. B unter den Handelsnamen Nylon^{®}, Fa. DuPont, Ultramid^{®}, Fa. BASF, Akulon^{®} K122, Fa. DSM, Zytel^{®} 7301, Fa. DuPont; Durethan^{®} B 29, Fa. Bayer und Grillamid^{®}, Fa. Ems Chemie bekannt.

Geeignet sind auch aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z. B. Poly-2,4,4-trimethylhexamethylen-terephthalamid oder Poly-m-phenylenisophthalamid, Blockcopolymere der vorstehend genannten Polyamide mit Polyolefinen, Olefin-Copolymeren, lonomeren oder chemisch gebundenen oder gepfropften Elastomeren, oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Die mono-aminofunktionalisierte Dialkylphosphinsäure/-ester/-salze, hergestellt nach einem oder mehreren der Ansprüche 1 bis 9 werden bevorzugt in Formmassen angewendet, die weiter zur Erzeugung von Polymer-Formkörpern eingesetzt werden.

Besonders bevorzugt enthält die flammgeschützte Formmasse 5 bis 30 Gew.-% mono-aminofunktionalisierte Dialkylphosphinsäuren, -salze oder -ester, die nach einem oder mehreren der Ansprüche 1 bis 9 hergestellt wurden, 5 bis 90 Gew.-% Polymer oder Mischungen derselben, 5 bis 40 Gew.-% Additive und 5 bis 40 Gew.-% Füllstoff, wobei die Summe der Komponenten immer 100 Gew.-% beträgt.

Die Erfindung betrifft auch Flammschutzmittel, die die mono-aminofunktionalisierte Dialkylphosphinsäuren, -salze oder -ester, die nach einem oder mehreren der Ansprüche 1 bis 9 hergestellt wurden enthalten.

Außerdem betrifft die Erfindung Polymer-Formmassen sowie PolymerFormkörper, -Filme, -Fäden und -Fasern, enthaltend erfindungsgemäß hergestellten mono-aminofunktionalisierten Dialkylphosphinsäuresalze (III) der Metalle Mg, Ca, Al, Zn, Ti, Sn, Zr, Ce oder Fe.

Die Erfindung wird durch die nachstehenden Beispiele erläutert.

Herstellung, Verarbeitung und Prüfung von flammgeschützten Polymerformmassen und flammgeschützten Polymerformkörpern.

Die Flammschutzkomponenten werden mit dem Polymergranulat und evtl. Additiven vermischt und auf einem Doppelschnecken-Extruder (Typ Leistritz LSM^{®} 30/34) bei Temperaturen von 230 bis 260 °C (PBT-GV) bzw. von 260 bis 280 °C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270 °C (PBT-GV) bzw. von 260 bis 290 °C (PA 66-GV) zu Prüfkörpern verarbeitet. Die Prüfkörper werden anhand des UL 94-Tests (Underwriter Laboratories) auf Flammwidrigkeit (Flammschutz) geprüft und klassifiziert.

An Prüfkörpern aus jeder Mischung wurden die Brandklasse UL 94 (Underwriter Laboratories) an Probekörpern der Dicke 1,5 mm bestimmt. Nach UL 94 ergeben sich folgende Brandklassen:
V-0 kein Nachbrennen länger als 10 sec, Summe der Nachbrennzeiten bei 10 Beflammungen nicht größer als 50 sec, kein brennendes Abtropfen, kein vollständiges Abbrennen der Probe, kein Nachglühen der Proben länger als 30 sec nach Beflammungsende.
V-1 kein Nachbrennen länger als 30 sec nach Beflammungsende, Summe der Nachbrennzeiten bei 10 Beflammungen nicht größer als 250 sec, kein Nachglühen der Proben länger als 60 sec nach Beflammungsende, übrige Kriterien wie bei V-0.
V-2 Zündung der Watte durch brennendes Abtropfen, übrige Kriterien wie bei V-1. nicht klassifizierbar (nkl) erfüllt nicht die Brandklasse V-2.

Bei einigen untersuchten Proben wurde außerdem der LOI-Wert gemessen. Der LOI-Wert (Limiting Oxygen Index) wird nach ISO 4589 bestimmt. Nach ISO 4589 entspricht der LOI der geringsten Sauerstoffkonzentration in Volumenprozent, die in einer Mischung von Sauerstoff und Stickstoff gerade noch die Verbrennung des Kunststoffs unterhält. Je höher der LOI-Wert, desto schwerer entflammbar ist das geprüfte Material.

| | | |
|---|---|---|
| LOI | 23 | brennbar |
| LOI | 24-28 | bedingt brennbar |
| LOI | 29-35 | flammwidrig |
| LOI | >36 | besonders flammwidrig |

### Eingesetzte Chemikalien und Abkürzungen

| | |
|---|---|
| VE-Wasser | voll-entsalztes Wasser |
| AIBN | Azo-bis-(isobutyronitril), (Fa. WAKO Chemicals GmbH) |
| THF | Tetrahydrofuran |
| WakoV65 | 2,2'-Azobis(2,4-dimethyl-valeronitril), (Fa. WAKO Chemicals GmbH) |
| Deloxan^{®} THP II | Metallfänger (Fa. Evonik Industries AG) |

### Beispiel 1

Bei Raumtemperatur werden in einem Dreihalskolben mit Rührer und Intensivkühler 188 g Wasser vorgelegt und unter Rühren und Durchleiten von Stickstoff entgast. Dann werden unter Stickstoff 0,2 mg Palladium(II)sulfat und 2,3 mg Tris(3-sulfo-phenyl)phosphin Trinatriumsalz hinzugegeben und gerührt, dann 66 g Phosphinsäure in 66 g Wasser zugegeben. Die Reaktionslösung wird in einen 2 I-Büchi-Reaktor überführt und unter Rühren und unter Druck mit Ethylen beschickt und das Reaktionsgemisch auf 80 °C geheizt. Nach einer Ethylenaufnahme von 28 g wird abgekühlt und freies Ethylen abgelassen. Das Reaktionsgemisch wird am Rotationsverdampfer vom Lösungsmittel befreit. Der Rückstand wird mit 100 g VE-Wasser versetzt und bei Raumtemperatur unter Stickstoffatmosphäre gerührt, dann filtriert und das Filtrat mit Toluol extrahiert, danach wird am Rotationsverdampfer vom Lösungsmittel befreit und 92 g (98 % der Theorie) Ethylphosphonigsäure aufgefangen.

### Beispiel 2

Wie in Beispiel 1 werden 99 g Phosphinsäure, 396 g Butanol, 42 g Ethylen, 6,9 mg Tris(dibenzylidenaceton)dipalladium, 9,5 mg 4,5-Bis(diphenylphosphino)-9,9-dimethylxanthen umgesetzt, dann zur Reinigung über eine mit Deloxan^{®} THP II beschickte Säule gegeben und danach nochmal n-Butanol zugegeben. Bei einer Reaktionstemperatur von 80 - 110 °C wird das gebildete Wasser durch Azeotropdestillation entfernt. Das Produkt wird durch Destillation bei vermindertem Druck gereinigt. Ausbeute: 189 g (84 % der Theorie) Ethylphosphonigsäurebutylester.

### Beispiel 3

Wie in Beispiel 1 werden 198 g Phosphinsäure, 198 g Wasser, 84 g Ethylen, 6,1 mg Palladium(II)sulfat, 25.8 mg 9,9-Dimethyl-4,5-bis(diphenylphosphino)-2,7-sulfonato-xanthen Dinatriumsalz umgesetzt, dann zur Reinigung über eine mit Deloxan^{®} THP II beschickte Säule gegeben und danach n-Butanol zugegeben. Bei einer Reaktions-temperatur von 80 - 110 °C wird das gebildete Wasser durch Azeotropdestillation entfernt. Das Produkt wird durch Destillation bei vermindertem Druck gereinigt. Man erhält so 374 g (83 % der Theorie) Ethylphosphonigsäurebutylester.

### Beispiel 4

In einem 500 ml-Fünfhalskolben mit Gaseinleitungsrohr, Thermometer, Intensivrührer und Rückflusskühler mit Gasverbrennung werden 94 g (1 mol) Ethylphosphonigsäure (hergestellt wie in Beispiel 1) vorgelegt. Bei Raumtemperatur wird Ethylenoxid eingeleitet. Unter Kühlung wird eine Reaktionstemperatur von 70 °C eingestellt und noch eine Stunde bei 80 °C nachreagiert. Die Ethylenoxidaufnahme beträgt 65,7 g. Die Säurezahl des Produktes ist kleiner 1 mg KOH/g. Ausbeute:129 g (94 % der Theorie) (Ethylphosphonigsäure-2-hydroxyethylester) als farbloses, wasserklares Produkt.

### Beispiel 5

564 g (6 mol) Ethylphosphonigsäure (hergestellt wie in Beispiel 1) werden in 860 g Wasser gelöst und in einen 5l Fünfhalskolben mit Thermometer, Rückflusskühler, Intensivrührer und Tropftrichter vorgelegt. Nach Aufheizen der Reaktionsmischung auf 100 °C wird bei Normaldruck innerhalb von 1 h 654,5 g (7 mol) Allylaminhydrochlorid und 500 g einer 5 %igen Natriumperoxodisulfat-Lösung (1,5 mol.-% bzgl. Allylaminhydrochlorid) zugetropft. Anschließend wird mit ca. 560 g (7 mol) 50 %ige Natriumhydroxid-Lösung neutralisiert und das Wasser im Vakuum abdestilliert. Der Rückstand wird in Tetrahydrofuran aufgenommen und extrahiert. Die unlöslichen Salze werden abfiltriert. Das Lösungsmittel des Filtrats wird im Vakuum abgetrennt. Ausbeute: 752 g (83 % der Theorie) Ethyl-(3-aminopropyl)-phosphinsäure als farbloser Feststoff.

### Beispiel 6

150 g (1 mol) Ethylphosphonigsäurebutylester (hergestellt wie in Beispiel 2) und 68,4 g (1,2 mol) Allylamin werden in einen Vierhalsrundkolben mit Rührer, Rückflusskühler, Thermometer und Stickstoffeinlass in 200 ml Butanol und erwärmt. Innerhalb von 1 h werden bei ca. 100 °C 98,4 g einer 5 %-igen Lösung von AIBN in Butanol zugetropft, danach das Lösungmittel im Vakuum abdestilliert. Nach chromatographischer Reinigung werden 135 g (65 % der Theorie) Ethyl-(3-aminopropyl)-phosphinsäurebutylester erhalten.

### Beispiel 7

414 g (2 mol) Ethyl-(3-aminopropyl)-phosphinsäurebutylester (hergestellt wie in Beispiel 6) werden in einem 1 l Fünfhalskolben mit Thermometer, Rückflusskühler, Intensivrührer und Tropftrichter vorgelegt. Bei 160 °C wird während 4 h 500 ml Wasser eindosiert und eine Butanol-Wasser Mischung abdestilliert. Der feste Rückstand wird aus Aceton umkristallisiert. Es werden 296 g (98 % der Theorie) Ethyl-(3-aminopropyl)-phosphinsäure als farbloser Feststoff erhalten.

### Beispiel 8

Zu 414 g (2 mol) Ethyl-(3-aminopropyl)-phosphinsäurebutylester (hergestellt wie in Beispiel 6) werden 155 g (2,5 mol) Ethylenglycol und 0,4 g Kaliumtitanyloxalat hinzugegeben und 2 h bei 200 °C gerührt. Durch langsames Evakuieren werden leicht flüchtige Anteile abdestilliert. Es werden 374 g (96 % der Theorie) Ethyl-(3-aminopropyl)-phosphinsäure-2-hydroxyethylester erhalten.

### Beispiel 9

906 g (6 mol) Ethyl-(3-aminopropyl)-phosphinsäure (hergestellt wie in Beispiel 5) werden in 860 g Wasser gelöst und in einem 51 Fünfhalskolben mit Thermometer, Rückflusskühler, Intensivrührer und Tropftrichter vorgelegt und mit ca. 480 g (6 mol) 50 %ige Natriumhydroxid-Lösung neutralisiert. Bei 85 °C wird eine Mischung von 1291 g einer 46 %igen wässrigen Lösung von Al₂(SO₄)₃·14 H₂O zugefügt. Anschließend wird der erhaltene Feststoff abfiltriert, mit heißem Wasser gewaschen und bei 130 °C im Vakuum getrocknet. Ausbeute: 887 g (93% der Theorie) Ethyl-3-aminopropyl-phosphinsäure Aluminium(III)salz als farbloses Salz.

### Beispiel 10

165 g (1 mol) Ethyl-(2-methyl-3-aminopropyl)-phosphinsäure (hergestellt analog Beispiel 5) und 85 g Titantetrabutylat werden in 500 ml Toluol 40 Stunden unter Rückfluss erhitzt. Dabei entstehendes Butanol wird mit Anteilen an Toluol von Zeit zu Zeit abdestilliert. Die entstandene Lösung wird vom Lösungsmittel befreit. Ausbeute: 172 g (98 % der Theorie) Ethyl-(2-methyl-3-aminopropyl)-phosphinsäure Titansalz.

### Beispiel 11

165 g (1 mol) Ethyl-(2-methyl-3-aminopropyl)-phosphinsäure (hergestellt analog Beispiel 5) und 100 g konzentrierte Salzsäure werden 1 Stunde bei Raumtemperatur gerührt. Wasser wird bei vermindertem Druck destilliert. Man erhält 201 g (100 % der Theorie) Ethyl-(2-methyl-3-aminopropyl)-phosphinsäure Hydrochlorid.

### Beispiel 12

207 g (1 mol) Ethyl-(3-aminopropyl)-phosphinsäurebutylester (hergestellt wie in Beispiel 6) und 242 g (1 mol) Triphenylboran werden in 400 ml Toluol 1 Stunde bei Raumtemperatur gerührt. Das Toluol wird bei vermindertem Druck abdestilliert. Man erhält 449 g (100 % der Theorie) Ethyl-(3-aminopropyl)-phosphinsäurebutylester als Triphenylboranadukt.

### Beispiel 13

159 g (1 mol) Ethyl-3-aminopropyl-phosphinsäure Aluminium(III)salz (hergestellt wie in Beispiel 9) werden in 100 ml Essigsäure 1 Stunde bei Raumtemperatur gerührt. Überschüssige Essigsäure wird bei vermindertem Druck destilliert. Man erhält 219 g (100 % der Theorie) Ethyl-3-aminopropyl-phosphinsäure Aluminium(III)salz als Essigsäuresalz.

### Beispiel 14

Eine Mischung von 50 Gew.-% Polybutylenterephthalat, 20 Gew.-% Ethyl-3-aminopropyl-phosphinsäure Aluminium(III)salz (hergestellt wie in Beispiel 9) und 30 Gew.-% Glasfasern werden auf einem Doppelschnecken-Extruder (Typ Leistritz LSM 30/34) bei Temperaturen von 230 bis 260 °C zu einer Polymerformmasse compoundiert. Der homogenisierte Polymerstrang wurde abgezogen, im Wasserbad gekühlt und anschließend granuliert. Nach Trocknung werden die Formmassen auf einer Spritzgießmaschine (Typ Aarburg Allrounder) bei 240 bis 270 °C zu Polymerformkörper verarbeitet und eine UL-94 Klassifizierung von V-0 bestimmt.

### Beispiel 15

Eine Mischung von 53 Gew.-% Polyamid 6.6, 30 Gew.-% Glasfasern, 17 Gew.-% Ethyl-(2-methyl-3-aminopropyl)-phosphinsäure Titansalz (hergestellt wie in Beispeil 10) werden auf einem Doppelschnecken-Extruder (Typ Leistritz LSM 30/34) zu Polymer-formmassen compoundiert. Der homogenisierte Polymerstrang wurde abgezogen, im Wasserbad gekühlt und anschließend granuliert. Nach Trocknung werden die Formmassen auf einer Spritzgießmaschine (Typ Aarburg Allrounder) bei 260 bis 290 °C zu Polymerformkörpern verarbeitet und eine UL-94 Klassifizierung von V-0 erhalten.

### Beispiel 16

Eine 75 %ige Supsension von 15,1 g Ethyl-(3-aminopropyl)-phosphinsäure (hergestellt wie in Beispiel 5) und 372,4 g Adipinsäurehexamethylendiaminsalz in Wasser werden unter Stickstoff in einem Stahlautoklaven vorgelegt und langsam auf eine Temperatur und einen Druck von 220 °C und 20 bar gebracht. Im Folgenden wird die Temperatur Schrittweise auf ca. 240 °C und ca. 270 °C unter Beibehaltung des Drucks erhöht, gebildetes Wasser kontinuierlich aus dem Autoklaven entfernt und der Druck langsam auf Normaldruck reduziert. Das Polymer (335 g) enthält 0,9 % Phosphor, der LOI beträgt 32, der von unbehandeltem Polyamid 6.6 24.

## Patentansprüche

1. Verfahren zur Herstellung von mono-aminofunktionalisierten Dialkylphosphinsäuren, -estern und -salzen, **dadurch gekennzeichnet, dass** man
a) eine Phosphinsäurequelle (I) 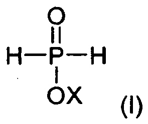 mit Olefinen (IV) 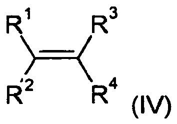 in Gegenwart eines Katalysators A zu einer Alkylphosphonigsäure, deren Salz oder Ester (II) 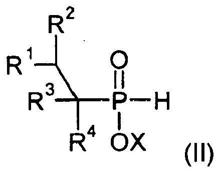 umsetzt,
b) die so entstandene Alkylphosphonigsäure, deren Salz oder Ester (II) mit einem Allylamin (V) 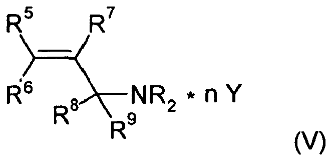 in Gegenwart eines Katalysators B zum mono-aminofunktionalisierten Dialkylphosphinsäurederivat (III) 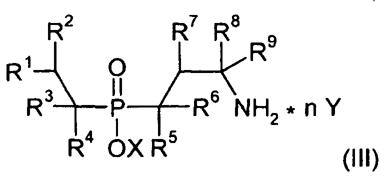 umsetzt oder die nach Schritt a) erhaltene Alkylphosphonigsäure, deren Salz oder Ester (II) und/oder die nach Schritt b) erhaltene mono-aminofunktionalisierte Dialkylphosphinsäure, deren Salz oder Ester (III) und/oder die jeweils resultierende Reaktionslösung davon mit einem Alkylenoxid oder einem Alkohol M-OH und/oder M'-OH verestert, und den jeweils entstandenen Alkylphosphonigsäureester (II) und/oder mono-aminofunktionalisierten Dialkylphosphinsäureester (III) dem weiteren Reaktionsschritt c) unterwirft, wobei R¹, R², R³, R⁴, R⁵, R⁶, R⁷, R⁸, R⁹ gleich oder verschieden sind und unabhängig voneinander H, C₁-C₁₈-Alkyl, C₆-C₁₈-Aryl, C₆-C₁₈-Aralkyl, C₆-C₁₈-Alkyl-Aryl, CN, CHO, OC(O)CH₂CN, CH(OH)C₂H₅, CH₂CH(OH)CH₃, 9-Anthracen, 2-Pyrrolidon, (CH₂)ₘOH, (CH₂)ₘNH₂, (CH₂)ₘNCS, (CH₂)ₘNC(S)NH₂, (CH₂)ₘSH, (CH₂)ₘS-2-thiazolin, (CH₂)ₘSiMe₃, C(O)R¹⁰, CH=CH-R¹⁰, CH=CH-C(O)R¹⁰ bedeuten, wobei die Gruppen C₆-C₁₈-Aryl, C₆-C₁₈-Aralkyl und C₆-C₁₈-Alkyl-Aryl mit -C(O)CH₃, OH, CH₂OH, NH₂, NO₂, OCH₃, SH und/oder OC(O)CH₃ substituiert sein können, wobei R¹⁰ für C₁-C₈-Alkyl oder C₆-C₁₈-Aryl steht und m eine ganze Zahl von 0 bis 10 bedeutet und X für C₁-C₁₈-Alkyl, C₆-C₁₈-Aryl, C₆-C₁₈-Aralkyl, C₆-C₁₈-Alkyl-Aryl, (CH₂)ₖOH, CH₂-CHOH-CH₂OH, (CH₂)ₖO(CH₂)ₖH, (CH₂)ₖ-CH(OH)-(CH₂)ₖH, (CH₂-CH₂O)ₖH, (CH₂-C[CH₃]HO)ₖH, (CH₂-C[CH₃]HO)ₖ(CH₂-CH₂O)ₖH, (CH₂-CH₂O)ₖ(CH₂-C[CH₃]HO)H, (CH₂-CH₂O)ₖ-alkyl, (CH₂-C[CH₃]HO)ₖ-alkyl, (CH₂-C[CH₃]HO)ₖ(CH₂-CH₂O)ₖ-alkyl, (CH₂-CH₂O)ₖ(CH₂-C[CH₃]HO)O-alkyl, (CH₂)ₖ-CH=CH(CH₂)ₖH, (CH₂)ₖNH₂, (CH₂)ₖN[(CH₂)ₖH]₂ steht wobei k eine ganze Zahl von 0 bis 10 ist und/oder für Mg, Ca, Al, Sb, Sn, Ge, Ti, Fe, Zr, Zn, Ce, Bi, Sr, Mn, Cu, Ni, Li, Na, K, H und/oder eine protonierte Stickstoffbase steht und Y für eine Mineralsäure, Carbonsäure, Lewissäure oder ogranische Säure steht, wobei n für eine ganze oder gebrochene Zahl von 0 bis 4 steht und es sich bei dem Katalysator A um Übergangsmetalle und/oder Übergangsmetallverbindungen und/oder Katalysatorsysteme handelt, die sich aus einem Übergangsmetall und/oder einer Übergangsmetallverbindung und mindestens einem Liganden zusammensetzen und es sich bei dem Katalysator B um Peroxide bildende Verbindungen und/oder Peroxoverbindungen und/oder um Azo-Verbindungen handelt.

2. Verfahren nach Anspruch 1, **dadurch gekennzeichnet, dass** man die nach Schritt b) erhaltene mono-aminofunktionalisierten Dialkylphosphinsäure, deren Salz oder Ester (III) anschließend in einem Schritt c) mit Metallverbindungen von Mg, Ca, Al, Sb, Sn, Ge, Ti, Fe, Zr, Zn, Ce, Bi, Sr, Mn, Li, Na, K und/oder einer protonierte Stickstoffbase zu den entsprechenden mono-aminofunktionalisierten Dialkylphosphinsäuresalzen (III) dieser Metalle und/oder einer Stickstoffverbindung umsetzt.

3. Verfahren nach Anspruch 1 oder 2, **dadurch gekennzeichnet, dass** R¹, R², R³, R⁴, R⁵, R⁶, R⁷, R⁸, R⁹ gleich oder verschieden sind und, unabhängig voneinander H, Methyl, Ethyl, n-Propyl, Isopropyl, n-Butyl, Isobutyl, tert. Butyl und/oder Phenyl bedeuten.

4. Verfahren nach einem oder mehreren der Ansprüche 1 bis 3, **dadurch gekennzeichnet, dass** X H, Ca, Mg, Al, Zn, Ti, Fe, Ce, Methyl, Ethyl, n-Propyl, Isopropyl, n-Butyl, Isobutyl, tert. Butyl, Phenyl, Ethylenglykol, Propylglykol, Butylglykol, Pentylglykol, Hexylglykol, Allyl und/oder Glycerin bedeuten.

5. Verfahren nach einem oder mehreren der Ansprüche 1 bis 4, **dadurch gekennzeichnet, dass** es sich bei den Übergangsmetallen und/oder Übergangsmetallverbindungen um solche aus der siebten und achten Nebengruppe handelt.

6. Verfahren nach einem oder mehreren der Ansprüche 1 bis 5, **dadurch gekennzeichnet, dass** es sich bei den Übergangsmetallen und/oder Übergangsmetallverbindungen um Rhodium, Nickel, Palladium, Platin und/oder Ruthenium handelt.

7. Verfahren nach einem oder mehreren der Ansprüche 1 bis 6, **dadurch gekennzeichnet, dass** es sich bei dem Katalysator B um Wasserstoffperoxid, Natriumperoxid, Lithiumperoxid, Kaliumpersulfat, Natriumpersulfat, Ammoniumpersulfat, Natriumperoxodisulfat, Kaliumperoxoborat, Peressigsäure, Benzoylperoxid, Di-t-butylperoxid und/oder Peroxodischwefelsäure und/oder um Azodiisobutyronitril, 2,2'-Azobis(2-amidinopropan)-dihydrochlorid und/oder 2,2'-Azobis(N,N'-dimethylen-isobutyramidin)-dihydrochlorid handelt.

8. Verfahren nach einem oder mehreren der Ansprüche 1 bis 7, **dadurch gekennzeichnet, dass** es sich bei dem Allylamin (V) um Allylamin, N-Methylallylamin, N,N-Dimethylallylamin, N-(Trimethylsilyl)allylamin, N-Allylanilin, N-Methyl-N-allylanilin, N-Methylallylanilin, 1,1-Dimethylallylamin, 2-Methylallylamin, 3-Phenylallylamin, Allylcyclohexylamin, Diallylamin, Diallylmethylamin, Triallylamin und/oder deren Salze mit Mineralsäuren, Carbonsäuren, Lewissäuren, organische Säuren oder Mischungen dieser Säuren handelt.

9. Verfahren nach einem oder mehreren der Ansprüche 1 bis 8, **dadurch gekennzeichnet, dass** es bei dem Alkohol der allgemeinen Formel M-OH um einwertige organische Alkohole mit einer Kohlenstoffkettenlänge von C₁-C₁₈ und es bei dem Alkohol der allgemeinen Formel M'-OH um mehrwertige organische Alkohole mit einer Kohlenstoffkettenlänge von C₁-C₁₈ handelt.

10. Herstellung von mono-aminofunktionalisierten Dialkylphosphinsäuren, -estern und -salzen nach einem oder mehreren der Ansprüche 1 bis 9 und anschließende Verwendung dieser Produkte als Zwischenprodukt für weitere Synthesen, als Binder, als Vernetzer bzw. Beschleuniger beim Aushärten von Epoxyharzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen und in Elektronikanwendungen.

11. Herstellung von mono-aminofunktionalisierten Dialkylphosphinsäuren, -salzen und -estern nach einem oder mehreren der Ansprüche 1 bis 9 und anschließende Verwendung dieser Produkte als Flammschutzmittel, insbesondere als Flammschutzmittel für Klarlacke und Intumeszenzbeschichtungen, als Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung.

## Claims

1. A method for producing monoamino-functionalized dialkylphosphinic acids, esters and salts, which comprises
a) reacting a phosphinic acid source (I) 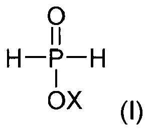 with olefins (IV) 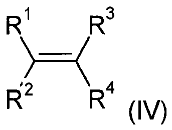 in the presence of a catalyst A to form an alkylphosphonous acid, salt or ester (II) 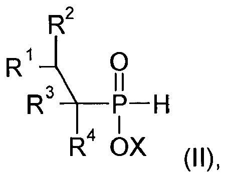
b) reacting the resulting alkylphosphonous acid, salt or ester (II) with an allylamine (V) 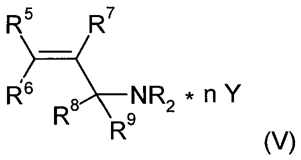 in the presence of a catalyst B to form the monoamino-functionalized dialkylphosphinic acid derivative (III) 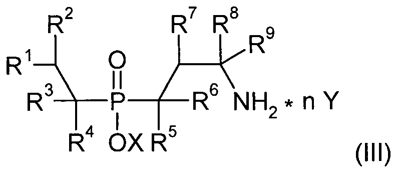 or esterifying the alkylphosphonous acid, salt or ester (II) obtained after step a) and/or the monoamino-functionalized dialkylphosphinic acid, salt or ester (III) obtained after step b) and/or the particular resulting reaction solution thereof with an alkylene oxide or an alcohol M-OH and/or M'-OH, and subjecting the respectively resulting alkylphosphonous ester (II), and/or monoamino-functionalized dialkylphosphinic ester (III) to the further reaction step c) where R¹, R², R³, R⁴, R⁵, R⁶, R⁷, R⁸, R⁹ are identical or different and are each independently H, C₁-C₁₈-alkyl, C₆-C₁₈-aryl, C₆-C₁₈-aralkyl, C₆-C₁₈-alkylaryl, CN, CHO, OC(O)CH₂CN, CH(OH)C₂H₅, CH₂CH(OH)CH₃, 9-anthracene, 2-pyrrolidone, (CH₂)ₘOH, (CH₂)ₘNH₂, (CH₂)ₘNCS, (CH₂)ₘNC(S)NH₂, (CH₂)ₘSH, (CH₂)ₘS-2-thiazoline, (CH₂)ₘSiMe₃, C(O)R¹⁰, CH=CHR¹⁰, CH=CH-C(O)R¹⁰, where the groups C₆-C₁₈-aryl, C₆-C₁₈-aralkyl and C₆-C₁₈-alkylaryl may be substituted with -C(O)CH₃, OH, CH₂OH, NH₂, NO₂, OCH₃, SH and/or OC(O)CH₃, and where R¹⁰ is C₁-C₈-alkyl or C₆-C₁₈-aryl and m is an integer from 0 to 10 and X is C₁-C₁₈-alkyl, C₆-C₁₈-aryl, C₆-C₁₈-aralkyl, C₆-C₁₈-alkylaryl, (CH₂)ₖOH, CH₂-CHOH-CH₂OH, (CH₂)ₖO(CH₂)ₖH, (CH₂)ₖ-CH(OH)-(CH₂)ₖH, (CH₂-CH₂O)ₖH, (CH₂-C[CH₃]HO)ₖH, (CH₂-C[CH₃]HO)ₖ(CH₂-CH₂O)ₖH, (CH₂-CH₂O)ₖ(CH₂-C[CH₃]HO)H, (CH₂-CH₂O)ₖ-alkyl, (CH₂-C[CH₃]HO)ₖ-alkyl, (CH₂-C[CH₃]HO)ₖ(CH₂-CH₂O)ₖ-alkyl, (CH₂-CH₂O)ₖ(CH₂-C[CH₃]HO)O-alkyl, (CH₂)ₖ-CH=CH(CH₂)ₖH, (CH₂)ₖNH₂, (CH₂)ₖN[(CH₂)ₖH]₂, where k is an integer from 0 to 10, and/or Mg, Ca, Al, Sb, Sn, Ge, Ti, Fe, Zr, Zn, Ce, Bi, Sr, Mn, Cu, Ni, Li, Na, K, H and/or a protonated nitrogen base and is a mineral acid, carboxylic acid, Lewis acid or organic acid, where n is a whole or fractional number from 0 to 4 and the catalyst A comprises transition metals and/or transition metal compounds and/or catalyst systems composed of a transition metal and/or transition metal compound and at least one ligand, and the catalyst B comprises peroxide-forming compounds and/or peroxo compounds and/or azo compounds.

2. The method according to claim 1 wherein the monoamino-functionalized dialkylphosphinic acid, its salt or ester (III) obtained after step b) is subsequently reacted in a step d) with metal compounds of Mg, Ca, Al, Sb, Sn, Ge, Ti, Fe, Zr, Zn, Ce, Bi, Sr, Mn, Li, Na, K and/or a protonated nitrogen base to form the corresponding monoamino-functionalized dialkylphosphinic acid salts (III) of these metals and/or of a nitrogen compound.

3. The method according to claim 1 or 2 wherein R¹, R², R³, R⁴, R⁵, R⁶, R⁷, R⁸, R⁹ are identical or different and are each independently H, methyl, ethyl, n-propyl, isopropyl, n-butyl, isobutyl, tert-butyl and/or phenyl.

4. The method according to one or more of claims 1 to 3 wherein X is H, Ca, Mg, Al, Zn, Ti, Fe, Ce, methyl, ethyl, n-propyl, isopropyl, n-butyl, isobutyl, tert-butyl, phenyl, ethylene glycol, propyl glycol, butyl glycol, pentyl glycol, hexyl glycol, allyl and/or glycerol.

5. The method according to one or more of claims 1 to 4 wherein the transition metals and/or transition metal compounds comprise such from the seventh and eighth transition groups.

6. The method according to one or more of claims 1 to 5 wherein the transition metals and/or transition metal compounds comprise rhodium, nickel, palladium, platinum and/or ruthenium.

7. The method according to one or more of claims 1 to 6 wherein the catalyst B comprises hydrogen peroxide, sodium peroxide, lithium peroxide, potassium persulfate, sodium persulfate, ammonium persulfate, sodium peroxodisulfate, potassium peroxoborate, peracetic acid, benzoyl peroxide, di-t-butyl peroxide and/or peroxodisulfuric acid and/or comprises azobisisobutyronitrile, 2,2'-azobis(2-amidinopropane) dihydrochloride and/or 2,2'-azobis(N,N'-dimethyleneisobutyramidine) dihydrochloride.

8. The method according to one or more of claims 1 to 7 wherein the allylamine (V) comprises allylamine, N-methylallylamine, N,N-dimethylallylamine, N-(trimethylsilyl)allylamine, N-allylaniline, N-methyl-N-allylaniline, N-methylallyl-aniline, 1,1-dimethylallylamine, 2-methylallylamine, 3-phenylallylamine, allylcyclo-hexylamine, diallylamine, diallylmethylamine, triallylamine and/or their salts with mineral acids, carboxylic acids, Lewis acids, organic acids or mixtures thereof.

9. The method according to one or more of claims 1 to 8 wherein the alcohol of the general formula M-OH comprises linear or branched, saturated and unsaturated, monohydric organic alcohols having a carbon chain length of C₁-C₁₈ and the alcohol of the general formula M'-OH comprises linear or branched, saturated and unsaturated polyhydric organic alcohols having a carbon chain length of C₁-C₁₈.

10. The preparation of monoamino-functionalized dialkylphosphinic acids, esters and salts obtained according to one or more of claims 1 to 9 and subsequent use of these products as an intermediate for further syntheses, as a binder, as a crosslinker or accelerant to cure epoxy resins, polyurethanes and unsaturated polyester resins, as polymer stabilizers, as crop protection agents, as a sequestrant, as a mineral oil additive, as a corrosion control agent, in washing and cleaning applications and in electronic applications.

11. The preparation of monoamino-functionalized dialkylphosphinic acids, salts and esters according to one or more of claims 1 to 9 and subsequent use of these products as a flame retardant, more particularly as a flame retardant for clearcoats and intumescent coatings, as a flame retardant for wood and other cellulosic products, as a reactive and/or nonreactive flame retardant for polymers, in the manufacture of flame-retardant polymeric molding materials, in the manufacture of flame-retardant polymeric molded articles and/or for flame-retardant finishing of polyester and cellulose straight and blend fabrics by impregnation.

## Revendications

1. Procédé de fabrication d'acides, d'esters et de sels dialkylphosphiniques mono-aminofonctionnalisés, **caractérisé en ce que**
a) une source d'acide phosphinique (I) 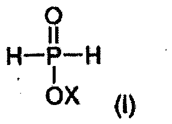 est mise en réaction avec des oléfines (IV) 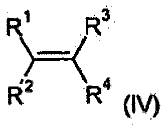 en présence d'un catalyseur A pour former un acide alkylphosphoneux, son sel ou son ester (II) 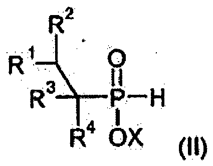
b) l'acide alkylphosphoneux ainsi obtenu, son sel ou son ester (II) est mis en réaction avec une allylamine (V) 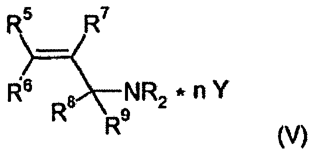 en présence d'un catalyseur B pour former le dérivé d'acide dialkylphosphonique mono-aminofonctionnalisé (III) 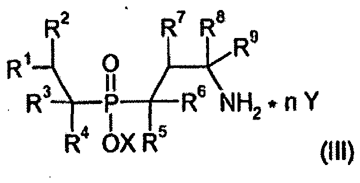 ou l'acide alkylphosphoneux obtenu à l'étape a), son sel ou son ester (II) et/ou l'acide dialkylphosphonique mono-aminofonctionnalisé obtenu à l'étape b), son sel ou son ester (III) et/ou leur solution réactionnelle résultante à chaque fois sont estérifiés avec un oxyde d'alkylène ou un alcool M-OH et/ou M'-OH, et l'ester d'acide alkylphosphoneux (II) et/ou l'ester d'acide dialkylphosphonique mono-aminofonctionnalisé (III) respectivement formé est soumis à l'étape de réaction c) ultérieure, R¹, R², R³, R⁴, R⁵, R⁶, R⁷, R⁸, R⁹ étant identiques ou différents et signifiant indépendamment les uns des autres H, alkyle en C₁-C₁₈, aryle en C₆-C₁₈, aralkyle en C₆-C₁₈, alkyl-aryle en C₆-C₁₈, CN, CHO, OC(O)CH₂CN, CH(OH)C₂H₅, CH₂CH(OH)CH₃, 9-anthracène, 2-pyrrolidone, (CH₂)ₘOH, (CH₂)ₘNH₂, (CH₂)ₘNCS, (CH₂)ₘNC(S)NH₂, (CH₂)ₘSH, (CH₂)ₘS-2-thiazoline, (CH₂)ₘSiMe₃, C(O)R¹⁰, CH=CH-R¹⁰, CH=CH-C(O)R¹⁰, les groupes aryle en C₆-C₁₈, aralkyle en C₆-C₁₈ et alkyl-aryle en C₆-C₁₈ pouvant être substitués avec -C(O)CH₃, OH, CH₂OH, NH₂, NO₂, OCH₃, SH et/ou OC(O)CH₃, R¹⁰ représentant alkyle en C₁-C₈ ou aryle en C₆-C₁₈ et m signifiant un nombre entier de 0 à 10, et X représentant alkyle en C₁-C₁₈, aryle en C₆-C₁₈, aralkyle en C₆-C₁₈, alkyl-aryle en C₆-C₁₈, (CH₂)ₖOH, CH₂-CHOH-CH₂OH, (CH₂)ₖO(CH₂)ₖH, (CH₂)ₖ-CH(OH)-(CH₂)ₖH, (CH₂-CH₂O)ₖH, (CH₂-C[CH₃]HO)ₖH, (CH₂-C[CH₃]HO)ₖ(CH₂-CH₂O)ₖH, (CH₂-CH₂O)ₖ(CH₂-C[CH₃]HO)H, (CH₂-CH₂O)ₖ-alkyle, (CH₂-C[CH₃]HO)ₖ-alkyle, (CH₂-C[CH₃]HO)ₖ(CH₂-CH₂O)ₖ-alkyle, (CH₂-CH₂O)ₖ(CH₂-C[CH₃]HO)O-alkyle, (CH₂)ₖ-CH=CH(CH₂)ₖH, (CH₂)ₖNH₂, (CH₂)ₖN[(CH₂)ₖH]₂, k représentant un nombre entier de 0 à 10 et/ou Mg, Ca, Al, Sb, Sn, Ge, Ti, Fe, Zr, Zn, Ce, Bi, Sr, Mn, Cu, Ni, Li, Na, K, H et/ou une base azotée protonée, et Y représentant un acide minéral, un acide carboxylique, un acide de Lewis ou un acide organique, n représentant un nombre entier ou fractionnaire de 0 à 4 et le catalyseur A consistant en des métaux de transition et/ou des composés de métaux de transition et/ou des systèmes catalytiques composés d'un métal de transition et/ou d'un composé de métal de transition et d'au moins un ligand, et le catalyseur B consistant en des composés formant des peroxydes et/ou des composés peroxo et/ou des composés azo.

2. Composé selon la revendication 1, **caractérisé en ce que** l'acide dialkylphosphonique mono-aminofonctionnalisé obtenu à l'étape b), son sel ou son ester (III) est ensuite mis en réaction lors d'une étape c) avec des composés métalliques de Mg, Ca, Al, Sb, Sn, Ge, Ti, Fe, Zr, Zn, Ce, Bi, Sr, Mn, Li, Na, K et/ou d'une base azotée protonée pour former les sels d'acide dialkylphosphonique mono-aminofonctionnalisés (III) correspondants de ces métaux et/ou d'un composé azoté.

3. Composé selon la revendication 1 ou 2, **caractérisé en ce que** R¹, R², R³, R⁴, R⁵, R⁶, R⁷, R⁸, R⁹ sont identiques ou différents et signifient, indépendamment les uns des autres, H, méthyle, éthyle, n-propyle, isopropyle, n-butyle, isobutyle, tert.-butyle et/ou phényle.

4. Procédé selon une ou plusieurs des revendications 1 à 3, **caractérisé en ce que** X signifie H, Ca, Mg, Al, Zn, Ti, Fe, Ce, méthyle, éthyle, n-propyle, isopropyle, n-butyle, isobutyle, tert.-butyle, phényle, éthylène glycol, propylglycol, butylglycol, pentylglycol, hexylglycol, allyle et/ou glycérine.

5. Procédé selon une ou plusieurs des revendications 1 à 4, **caractérisé en ce que** les métaux de transition et/ou les composés de métaux de transition sont du septième et huitième groupe de transition.

6. Procédé selon une ou plusieurs des revendications 1 à 5, **caractérisé en ce que** les métaux de transition et/ou les composés de métaux de transition sont du rhodium, du nickel, du palladium, du platine et/ou du ruthénium.

7. Procédé selon une ou plusieurs des revendications 1 à 6, **caractérisé en ce que** le catalyseur B consiste en du peroxyde d'hydrogène, du peroxyde de sodium, du peroxyde de lithium, du persulfate de potassium, du persulfate de sodium, du persulfate d'ammonium, du peroxodisulfate de sodium, du peroxoborate de potassium, de l'acide peracétique, du peroxyde de benzoyle, du peroxyde de di-t-butyle et/ou de l'acide peroxodisulfurique et/ou de l'azodiisobutyronitrile, du dichlorhydrate de 2,2'-azobis(2-amidinopropane) et/ou du dichlorhydrate de 2,2'-azobis(N,N'-diméthylène-isobutyramidine).

8. Procédé selon une ou plusieurs des revendications 1 à 7, **caractérisé en ce que** l'allylamine (V) consiste en de l'allylamine, de la N-méthylallylamine, de la N,N-diméthylallylamine, de la N-(triméthylsilyl)allylamine, de la N-allylaniline, de la N-méthyl-N-allylaniline, de la N-méthylallylaniline, de la 1,1-diméthylallylamine, de la 2-méthylallylamine, de la 3-phénylallylamine, de l'allylcyclohexylamine, de la diallylamine, de la diallylméthylamine, de la triallylamine et/ou leurs sels avec des acides minéraux, des acides carboxyliques, des acides de Lewis, des acides organiques ou des mélanges de ces acides.

9. Procédé selon une ou plusieurs des revendications 1 à 8, **caractérisé en ce que** l'alcool de formule générale M-OH consiste en des alcools organiques monovalents d'une longueur de chaîne carbonée de C₁-C₁₈ et l'alcool de formule générale M'-OH consiste en des alcools organiques polyvalents d'une longueur de chaîne carbonée de C₁-C₁₈.

10. Fabrication d'acides, d'esters et de sels dialkylphosphiniques mono-aminofonctionnalisés selon une ou plusieurs des revendications 1 à 9, puis utilisation de ces produits en tant que produit intermédiaire pour des synthèses ultérieures, en tant que liant, en tant qu'agent de réticulation ou accélérateur lors du durcissement de résines époxy, de polyuréthanes et de résines de polyester insaturées, en tant que stabilisateurs polymères, en tant qu'agent phytoprotecteur, en tant que séquestrant, en tant qu'additif pour huile minérale, en tant qu'agent anticorrosion, dans des applications d'agents de lavage et de nettoyage et dans des applications électroniques.

11. Fabrication d'acides, de sels et d'esters dialkylphosphiniques mono-aminofonctionnalisés selon une ou plusieurs des revendications 1 à 9, puis utilisation de ces produits en tant qu'agent ignifuge, notamment en tant qu'agent ignifuge pour laques transparentes et revêtements intumescents, en tant qu'agent ignifuge pour bois et autres produits cellulosiques, en tant qu'agent ignifuge réactif et/ou non réactif pour polymères, pour la fabrication de matériaux de moulage polymères ignifugés, pour la fabrication de corps moulés polymères ignifugés et/ou pour l'ignifugation de polyesters et de tissus cellulosiques purs et mixtes par imprégnation.
